# EUROPEAN PATENT SPECIFICATION

(11) **EP 3 489 124 B1**
(45) Date of publication and mention of the grant of the patent: **19.06.2024**
(21) Application number: 17831336.7
(22) Date of filing: 19.07.2017
(51) Int. Cl.: B63B 1/38

(54) **FRICTION REDUCING DEVICE AND SHIP COMPRISING SAME**
REIBUNGSMINDERUNGSVORRICHTUNG UND SCHIFF DAMIT
DISPOSITIF DE RÉDUCTION DU FROTTEMENT ET NAVIRE COMPORTANT CELUI-CI

(30) Priority: 19.07.2016 KR 20160091620; 19.07.2016 KR 20160091637; 19.07.2016 KR 20160091652; 19.07.2016 KR 20160091659; 19.07.2016 KR 20160091679; 19.07.2016 KR 20160091683; 19.07.2016 KR 20160091684; 19.07.2016 KR 20160091686; 19.07.2016 KR 20160091688
(43) Date of publication of application: 29.05.2019
(73) Proprietor: Hyundai Heavy Industries Co., Ltd., Ulsan 44032 (KR)
(72) Inventor: HAN, Sang-Ho, Ulsan 44032 (KR); KIM, Chang-Hyeon, Ulsan 44032 (KR)
(74) Representative: Nederlandsch Octrooibureau
(86) International application number: PCT/KR2017/007754
(87) International publication number: WO 2018/016863

(56) References cited:
- WO-A1-2013/099301
- JP-A- 2002 321 685
- JP-A- 2009 040 271
- JP-A- 2010 120 612
- JP-A- 2011 063 166
- JP-A- 2012 166 704
- JP-A- 2012 166 704
- JP-A- 2012 224 108
- JP-A- 2014 012 443
- KR-A- 20010 095 242
- NZ-A- 568 155
- US-A1- 2003 097 971
- US-A1- 2013 269 589

## Description

### [Technical Field]

The present disclosure relates to friction reducing device. The present disclosure relates to a ship, and more particularly, to a ship configured to have significantly reduced frictional resistance between a ship and seawater by using a friction reducing device.

### [Background Art]

A ship sailing on the sea may be subject to various types of resistance during operations of the ship. For example, during the operations of the ship, the most of frictional resistance may occur on the wetted surface area of the hull. This frictional resistance may account for about 80% of total resistance in a relatively low speed ship, and about 50% of the total resistance in a relatively high speed ship.

The frictional resistance occurring on the hull may be due to viscosity of water particles in contact with the hull. Therefore, when a layer of a material less dense than the specific gravity of water is formed between the hull and water to block the viscosity of the water, such frictional resistance may be remarkably reduced. In addition, the reduction of frictional resistance may improve speed of the ship during operations, and may significantly reduce fuel costs of the ship.

In order to solve the above problem, an air lubrication method in which air is blown from the hull to form a layer of bubbles on a surface of the hull is being studied.

In the air lubrication method, a method in which air is supplied to an air chamber in a bottom of the ship, air in the air chamber is blown out into water through a plurality of holes passing through an external plate of the bottom of the ship, and the air flows along a surface of the bottom of the ship, has mainly been used.

Such an air lubrication device may require a separate installation space, and may thus have a problem of obstructing the installation of other devices or increasing a size of a hull.

Meanwhile, a ship may use seawater to cool mechanical devices such as engines, or the like. For example, a sea chest, configured to receive seawater, may be formed on side surfaces of the ship.

However, since not only seawater but also bubbles generated by the above-described friction reducing device may be sucked through the sea chest, a problem in which efficiency of a cooling system due to the bubbles is lowered may occur. Therefore, development of a device capable of solving the above problems is required.

A ship also may include an air compressor. The compressed air generated by the air compressor may be used for starting an engine or a generator engine in the ship. Therefore, performance of the air compressor may influence operational efficiency and facility efficiency of the ship.

Large ships may sail in various regions. For example, large ships may sail a relatively wide range of regions from tropical regions to polar regions. However, since such conditions for sailing cause deviations in a temperature of air introduced into an air compressor, a problem in which the efficiency of the air compressor is lowered may occur. For example, a ship sailing in tropical waters or sailing during the hotter summer season may have a problem in which relatively high temperature air, having a temperature higher than room temperature, is introduced into the compressor. Meanwhile, a ship sailing in polar waters or sails during the colder winter season may have a problem in which relatively low temperature air, lower than room temperature, is introduced into the compressor.

Therefore, it is necessary to develop a ship capable of constantly maintaining efficiency of an air compressor, regardless of a region in which a ship is sailing and a season in which a ship is sailing. Examples of ships with friction reducing device can be found in e.g. JP 2010120612 or US 2013/269589.

### [Disclosure]

### [Technical Problem]

An aspect of the present disclosure is to provide a ship capable of minimizing frictional resistance generated during an operation of the ship.

Another object of the present disclosure is to provide a ship capable of minimizing an installation space of an air lubrication device.

Another object of the present disclosure is to provide a ship capable of minimizing re-inflow of gas or bubbles generated by a friction reducing device to the seat chest.

Another object of the present disclosure is to provide a ship capable of improving efficiency of an air compressor regardless of operating conditions.

### [Technical Solution]

This object is achieved according to the invention with a friction reducing device exhibiting the technical features of one of the independent claims. The invention furthermore also relates to a ship comprising such a friction reducing device.

### [Advantageous Effects]

According to an aspect of the present disclosure, frictional resistance generated during an operation of a ship may be minimized to improve operational efficiency of the ship.

Further, according to an aspect of the present disclosure, an installation space of an air lubrication device may be minimized.

In addition, according to an aspect of the present disclosure, efficiency deterioration of a cooling system caused by re-inflow of gas or bubbles to the sea chest may be suppressed or reduced.

Furthermore, according to an aspect of the present disclosure, operational efficiency of an air compressor mounted on a ship sailing in a tropical or polar region may be improved.

### [Description of Drawings]

FIG. 1 is a side view of a ship according to an embodiment of the present disclosure;
FIG. 2 is a bottom view of the ship illustrated in FIG. 1;
FIG. 3 is a schematic diagram of the friction reducing device illustrated in FIG. 1;
FIG. 4 is a perspective view of the air storage unit illustrated in FIG. 3;
FIG. 5 is a bottom perspective view of the first air storage chamber illustrated in FIG. 4;
FIG. 6 is a bottom view of the first air storage chamber illustrated in FIG. 5;
FIG. 7 is an enlarged bottom view and a cross-sectional view of the blow hole illustrated in FIG. 6;
FIG. 8 is a bottom perspective view of an air storage chamber according to another embodiment;
FIG. 9 is a bottom view of the air storage chamber illustrated in FIG. 8;
FIG. 10 is an enlarged bottom view and a cross-sectional view of the blow hole illustrated in FIG. 9;
FIG. 11 is a bottom view and a cross-sectional view of a blow hole according to another embodiment;
FIG. 12 is a bottom view and a cross-sectional view of a blow hole according to another embodiment;
FIG. 13 is a bottom view and a cross-sectional view of a blow hole according to another embodiment;
FIG. 14 is a bottom view and a cross-sectional view of a blow hole according to another embodiment;
FIG. 15 is a bottom view and a cross-sectional view of a blow hole according to another embodiment;
FIG. 16 is a graph illustrating the total resistance value of a ship versus a thickness of an air layer;
FIG. 17 is a bottom view of a ship according to another embodiment of the present disclosure;
FIG. 18 is a bottom view of a ship according to another embodiment of the present disclosure;
FIG. 19 is a schematic diagram of a pipeline of a friction reducing device;
FIG. 20 is a cross-sectional view taken along line A-A of the pipeline illustrated in FIG. 19;
FIG. 21 is a cross-sectional view taken along line A-A of a pipeline according to another embodiment;
FIG. 22 is a cross-sectional view taken along line A-A of a pipeline according to another embodiment;
FIG. 23 is a cross-sectional view taken along line A-A of a pipeline according to another embodiment;
FIG. 24 is an enlarged side view of the ship illustrated in FIG. 1;
FIG. 25 is an enlarged side view of a ship according to another embodiment;
FIG. 26 is an enlarged side view of a ship according to another embodiment;
FIG. 27 is a cross-sectional view taken along line B-B of the ship illustrated in FIG. 26;
FIG. 28 is an enlarged side view of a ship according to another embodiment;
FIG. 29 is a cross-sectional view taken along line C-C of the sea chest illustrated in FIG. 28;
FIG. 30 is a cross-sectional view taken along line C-C of a sea chest according to another embodiment;
FIGS. 31 to 35 are cross-sectional views taken along line C-C of a sea chest according to another embodiment;
FIG. 36 is a layout diagram of a machine room and a compressor of a ship according to a first embodiment of the present disclosure;
FIG. 37 is a layout diagram of a machine room and a compressor of a ship according to a second embodiment of the present disclosure;
FIG. 38 is a layout diagram of a machine room and a compressor of a ship according to a third embodiment of the present disclosure;
FIG. 39 is a layout diagram of a machine room and a compressor of a ship according to a fourth embodiment of the present disclosure;
FIG. 40 is a layout diagram of a machine room and a compressor of a ship according to a fifth embodiment of the present disclosure;
FIG. 41 is a layout diagram of a machine room and a compressor of a ship according to a sixth embodiment of the present disclosure;
FIG. 42 is a layout diagram of a machine room and a compressor of a ship according to a seventh embodiment of the present disclosure; and
FIG. 43 is a layout diagram of a machine room and a compressor of a ship according to an eighth embodiment of the present disclosure.

### [Best Mode for Invention]

Hereinafter, preferred embodiments of the present disclosure will be described in detail with reference to the accompanying drawings.

In the following description of the present disclosure, the terms referring to the components of the present disclosure are named in consideration of the functions of the respective components, and thus should not be understood as limiting the technical components of the present disclosure.

In addition, throughout the specification, it can be understood that a configuration may be "connected" with another configuration, including not only when the configurations are directly connected to each other, but also when they are indirectly connected with another configuration. Also, "comprising" means that other components may be included, rather than excluding other components, unless specifically stated otherwise.

### [Friction reducing device]

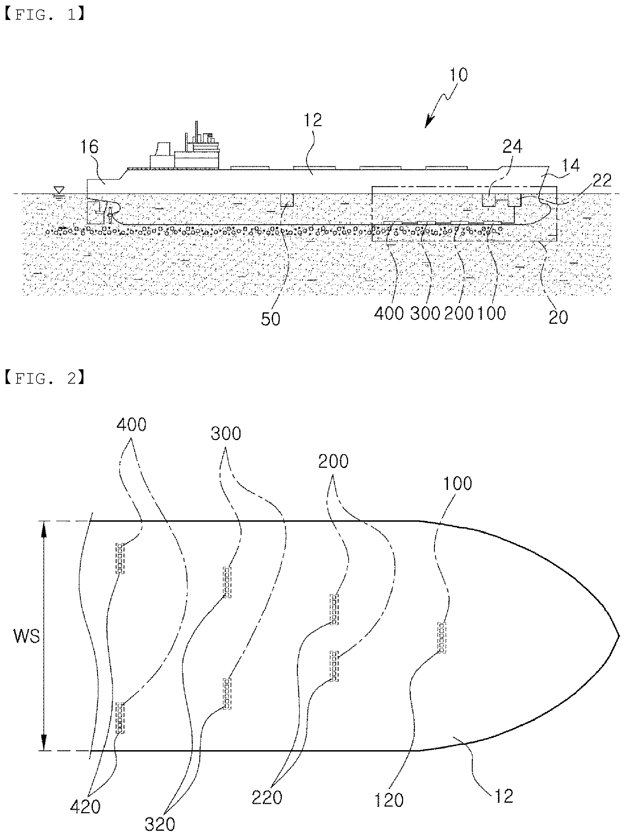

A ship according to an embodiment will be described with reference to FIG. 1.

A ship 10 according to the present embodiment may include means for reducing frictional resistance between a hull 12 and seawater. For example, the ship 10 may include a friction reducing device 20.

The friction reducing device 20 may be disposed in the hull 12. In addition, the friction reducing device 20 may be disposed on a side of a bow 14. The friction reducing device 20 disposed as described above may be configured to blow a fluid out, and cover the water from the bow 14 to a stern 16 in the hull 12 by the blown fluid.

The friction reducing device 20 may be configured to blow gas out. The present disclosure is not limited to the gas, which is to be blown out by the friction reducing device 20. For example, the friction reducing device 20 may blow liquid having a specific gravity less than that of water or seawater out.

The friction reducing device 20 may be configured to blow gas out in a relatively small size. For example, the friction reducing device 20 may blow gas out in a unit of micrometers. The size of the gas blown out of the friction reducing device 20 is not limited to a unit of micrometers. For example, the friction reducing device 20 may blow bubbles out having a size larger than a unit of micrometers or smaller than a unit of micrometers, depending on the size of the ship 10.

The friction reducing device 20 may include a plurality of air storage units 100, 200, 300, and 400, configured to blow air out into water. The plurality of air storage units 100, 200, 300, and 400 may be arranged at predetermined intervals in a direction from the bow 14 towards the stern 16 of the hull 12. In this case, a distance between the air storage units 100, 200, 300, and 400 may be changed, depending on a size of the ship 10.

The friction reducing device 20 may further include an air compressor 22 and a controller 24. The air compressor 22 may be operated to supply a predetermined amount of fluid to the air storage units 100, 200, 300, and 400. The air compressor 22 may be operated such that a predetermined hydraulic pressure of fluid may be formed in the air storage units 100, 200, 300, and 400. The controller 24 may be configured to control flow rates of air supplied to the air storage units 100, 200, 300, and 400. For example, the controller 24 may reduce or increase an amount of gas supplied to at least one of a first air storage unit 100, a second air storage unit 200, a third air storage unit 300, and a fourth air storage unit 400.

The ship 10 configured as above described may reduce a contact area and frictional resistance between a surface of the hull 12 and the seawater by the friction reducing device 20. Therefore, the operational speed may be improved, and the fuel consumption may be reduced.

The ship 10 may include a means for sensing a rolling condition of the hull 12. For example, a second detection sensor 50 capable of detecting an inclination of the hull 12 may be disposed on left and right sides of the hull 12.

Next, an arrangement of air storage units 100, 200, 300, and 400 will be described with reference to FIG. 2.

The air storage units 100, 200, 300, and 400 may be arranged in a hull 12. In addition, the air storage units 100, 200, 300, and 400 may be arranged such that a large amount of bubbles may spread evenly over a bottom surface of the hull 12. For example, one of the first air storage units 100 may be disposed at a front end of the hull 12, two of the second air storage units 200 may be disposed at a first interval rearward from the first air storage unit 100, two of the third air storage units 300 may be disposed at a second interval, longer than the first interval, rearward from the second air storage unit 200, and two or more of the fourth air storage units 400 may be disposed at a third interval, longer than the second interval, rearward from the third air storage unit 300. Although the arrangement interval of the fourth air storage unit 400 is illustrated to be shorter than a maximum ship width WS of the hull 12, the arrangement interval of the fourth air storage unit 400 should be not always shorter than the maximum ship width WS of the hull 12.

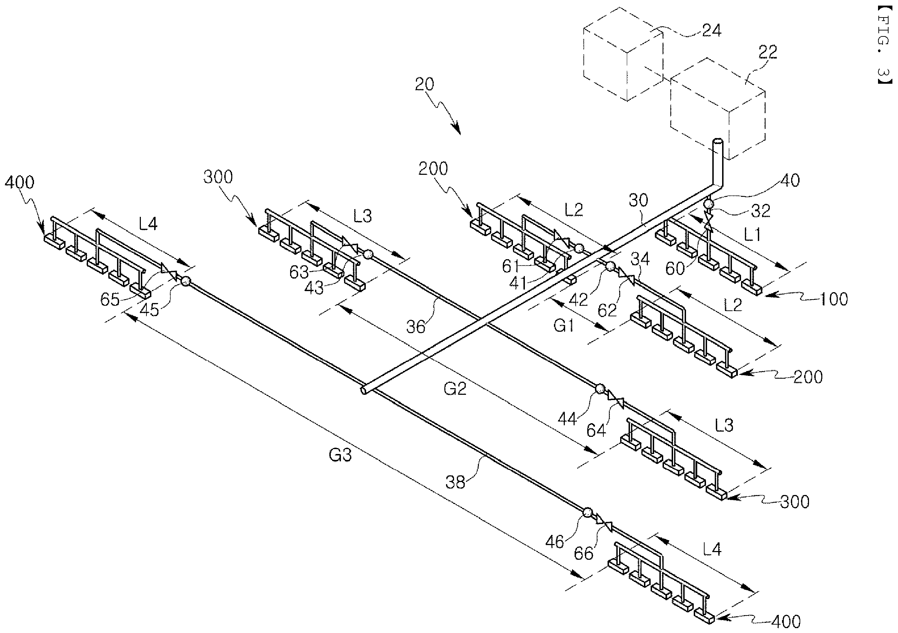

Next, the configuration of the friction reducing device 20 will be described in detail with reference to FIG. 3.

The friction reducing device 20 may include a plurality of air storage units 100, 200, 300, and 400 as illustrated in FIG. 3.

The air storage units 100, 200, 300, and 400 may be arranged at predetermined intervals in a direction from a bow 14 towards a stern 16 of a hull 12. For example, a second air storage unit 200 may be disposed at a first distance S1 from a first air storage unit 100, a third air storage unit 300 may be disposed at a second distance S2 from the second air storage unit 200, and a fourth air storage unit 400 may be disposed at a third distance S3 from the third air storage unit 300.

The distances S1, S2, and S3 between the different air storage units 100, 200, 300, and 400 may generally be the same as each other. For example, the first distance S1, the second distance S2, and the third distance S3 may all have the same magnitudes as each other. The magnitudes of the first distance S1, the second distance S2, and the third distance S3 may be not necessarily the same as each other. In one embodiment, the first distance S1 may be changed to be shorter than the second distance S2, and the second distance S2 may be changed to be shorter than the third distance S3. In another embodiment, the first distance S1 may be changed to be longer than the second distance S2, and the second distance S2 may be changed to be longer than the third distance S3.

The air storage units 100, 200, 300, and 400 may be arranged in a generally V-shape. For example, one of the first air storage unit 100 may be disposed on a bow side 14 of the hull 12, two of the second air storage units 200 may be disposed at a first interval G1, two of the third air storage units 300 may be disposed at a second interval G2, longer than the first interval G1, and two of the fourth air storage units 400 may be disposed at a third interval G3, longer than the second interval G2.

In addition, the air storage units 300 and 400 may be arranged not to generally overlap the preceding air storage units 200 and 300. For example, two of the third air storage units 300 may be disposed to be spaced apart from each other at a second interval G2, longer than a distance (L2 + G1 + L2) from one end of the one second air storage unit 200 to the other end of the other second air storage unit 200, and two of the fourth air storage units 400 may be disposed to be spaced apart from each other at a third interval G3, longer than a distance (L3 + G2 + L3) from one end of the one third air storage unit 300 to the other end of the other third air storage unit 300.

The arrangement of the third air storage unit 300 and the fourth air storage unit 400 may be advantageous for uniformly forming a large number of bubbles on a surface of the hull 12.

The second air storage unit 200 may be disposed in a different manner to the third air storage unit 300 and the fourth air storage unit 400, in consideration of the fact that frictional resistance may be concentrated in a peripheral portion of a longitudinal center axis of the hull 12. For example, the second air storage unit 200 may be disposed to partially overlap the first air storage unit 100. For example, the first interval G1 between the two second air storage units 200 may be shorter than a length L1 of the first air storage unit 100.

The friction reducing device 20 may include pipelines 30, 32, 34, 36, and 38 configured to connect the plurality of air storage units 100, 200, 300, and 400.

A main pipeline 30 may extend in the longitudinal direction of the hull 12, and may be connected to the air compressor 22. The main pipeline 30 configured as described above may transfer gas or pressure formed by the air compressor 22 in the longitudinal direction of the hull 12. For reference, in the present embodiment, the main pipeline 30 has a size of several hundred millimeters (approximately 400 millimeters).

Subsidiary pipelines 32, 34, 36, and 38 may be configured to connect the main pipeline 30 to the air storage units 100, 200, 300, and 400. For example, the first subsidiary pipeline 32 may connect the main pipeline 30 to the first air storage unit 100, the second subsidiary pipeline 34 may connect the main pipeline 30 to the second air storage unit 200, the third subsidiary pipeline 36 may connect the main pipeline 30 to the third air storage unit 300, and the fourth subsidiary pipeline 38 may connect the main pipeline 30 to the fourth air storage unit 400.

The subsidiary pipelines 32, 34, 36, and 38 may be configured to have different cross-sectional magnitudes from each other. For example, diameters of the subsidiary pipelines 32, 34, 36, and 38 may be reduced in a direction from the bow toward the stern in the hull 12. In the present embodiment, diameters of the first subsidiary pipeline 32 and the second subsidiary pipeline 34 may be 150 mm, a diameter of the third subsidiary pipeline 36 may be 120 mm, and a diameter of the fourth subsidiary pipeline 38 may be 80 mm.

The friction reducing device 20 may include components for controlling the air storage units 100, 200, 300, and 400. For example, the friction reducing device 20 may include first detection sensors 40, 41, 42, 43, 44, 45, and 46, and valves 60, 61, 62, 63, 64, 65, and 66.

The first detection sensors 40, 41, 42, 43, 44, 45 and 46 may be configured to measure flow rates of air to be supplied to the air storage units 100, 200, 300, and 400, or pressures of the air storage units 100, 200, 300, and 400. For example, the first detection sensor 40, 41, 42, 43, 44, 45, and 46 may be a type of a flow rate detecting sensor for sensing flow rates of air flowing from the subsidiary pipeline 30 to the subsidiary pipelines 32, 34, 36, and 66. Alternatively, the first detection sensor 40, 41, 42, 43, 44, 45, and 46 may be a type of a pressure sensor for sensing an internal pressure of the air storage units 100, 200, 300, and 400.

The first detection sensors 40, 41, 42, 43, 44, 45, and 46 configured as described above may periodically detect the states of the air storage units 100, 200, 300, and 400, and may transfer the sensed information to the controller 24.

The valves 60, 61, 62, 63, 64, 65, and 66 may be configured to adjust flow rates of air supplied to the air storage units 100, 200, 300, and 400. For example, a first valve 60 may adjust an amount of gas to be supplied to the first air storage unit 100, the second valves 61 and 62 may adjust an amount of gas to be supplied to the second air storage unit 200, the third valves 63 and 64 may adjust an amount of gas to be supplied to the third air storage unit 300, and the fourth valves 65 and 66 may adjust an amount of gas to be supplied to the fourth air storage unit 400.

The friction reducing device 20 configured as described above may adjust an amount of bubbles to be blown out of the air storage units 100, 200, 300, and 400, depending on the operational speed of the ship 10. For example, the friction reducing device 20 may adjust the valves 60, 61, 62, 63, 64, 65 and 66 to blow a relatively large amount of bubbles from the air storage units 100, 200, 300, and 400 out during a relatively high speed operation of the ship 10. On the contrary, the friction reducing device 20 may adjust the valves 60, 61, 62, 63, 64, 65 and 66 to blow a relatively small amount of bubbles from the air storage units 100, 200, 300, and 400 out during a relatively low speed operation of the ship 10.

The friction reducing device 20 may determine whether the air storage units 100, 200, 300, and 400 are abnormal through the above-described configurations. For example, the friction reducing device 20 may determine whether the air storage units 100, 200, 300, and 400 are abnormal, by comparing values acquired from the first detection sensors 40, 41, 42, 43, 44, 45, and 46 with each other, or comparing the values with a predetermined value, and may operate to resolve them. For example, when a measured value of the first detection sensor 43 is significantly less than a measured value of the first detection sensor 44 or a measured value of the other first detection sensor 40, 41, 42, 44, 45, or 46, the friction reducing device 20 may determine that a blow hole of the third air storage unit 300 is blocked by a foreign substance. The friction reducing device 20 may close all of the other valves 60, 61, 62, 64, 65, and 66 of the air storage units 100, 200, 300, and 400 to generate a pressure necessary for removing the foreign substance in the third air storage unit 300. As a comparative embodiment, when a measured value of the first detection sensor 40 is significantly less than a measured value of the first detection sensor 41, 42, 43, 44, 45, or 46, the friction reducing device 20 may determine that a blow hole of the first air storage unit 100 is blocked by a foreign substance, and may close all of the valves 61, 62, 63, 64, 65, and 66 of the air storage units 200, 300, and 400.

Therefore, even when a portion of the air storage units 100, 200, 300, and 400 does not exhibit their original functions due to aquatic organisms or other foreign substance, there may be an advantage that the ship 10 according to the present embodiment may quickly detect and address such a problem.

The friction reducing device 20 may be configured to control an operation of the air storage units 100, 200, 300, and 400, depending on a rolling state of the hull 12. For example, the friction reducing device 20 may determine whether the air storage units 100, 200, 300, and 400 in which blown air is likely to flow out through a side surface of the ship by a movement of the ship is present, on the basis of the rolling information of the hull 12 received from the second detection sensor 50. Further, the friction rescue device 20 may stop an operation of the selected air storage unit, based on the determined information. For example, the friction reducing device 20 may close the valves 45 and 46 such that no gas is supplied to the fourth air storage unit 400, when air blown out of the fourth air storage unit 400 by rolling of the hull 12 flows out along a side surface of the ship by buoyancy along the inclined surface formed by a roll motion of the hull, and effects for reducing the frictional resistance are determined as being remarkably decreased.

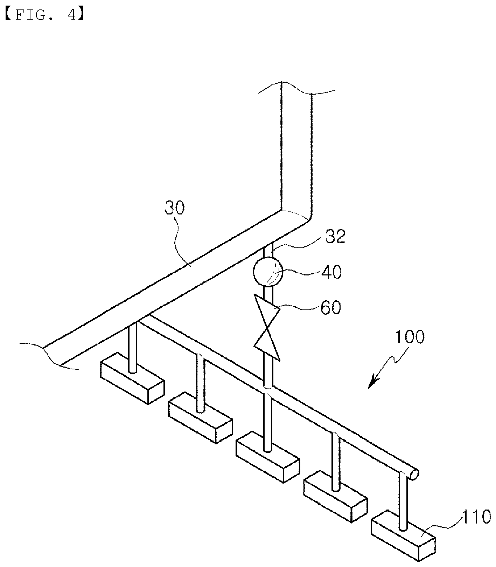

In the following, the air storage unit will be described with reference to FIG. 4. Although only a first air storage unit 100 is illustrated in FIG. 4, it can be understood that air storage units 200, 300, and 400, which are not illustrated, have the same or similar structure as the first air storage unit 100.

The first air storage unit 100 may include a plurality of air storage chambers 110. For example, the first air storage unit 100 may include five air storage chambers 110 as illustrated in FIG. 4. The number of the air storage chambers 110 constituting the first air storage unit 100 is not limited to five. For example, the number of the air storage chambers 110 may be increased or decreased, depending on a ship width WS.

The air storage chamber 110 may have generally rectangular parallelepiped shape. In addition, the air storage chamber 110 has a rectangular parallelepiped shape extending in the width direction of the hull 12. A shape of the air storage chamber 110 is not limited to such a rectangular parallelepiped shape. In one embodiment, the shape of the air storage chamber 110 may be changed to a regular hexahedral or other polyhedral shape, or a cylindrical shape.

The air storage chamber 110 may be connected to a subsidiary pipeline 32. An internal portion of the air storage chamber 110, connected to the subsidiary pipeline 32, may be always filled with air having a predetermined pressure. The air storage chamber 110 configured as described above may continuously blow a large amount of bubbles out into water by pressure applied through the subsidiary pipeline 32.

The air storage chamber 110 may be formed integrally with the surface of the hull 12. For example, a bottom surface of the air storage chamber 110 may be in close contact with the surface of the hull 12, or may form a portion of the surface of the hull 12.

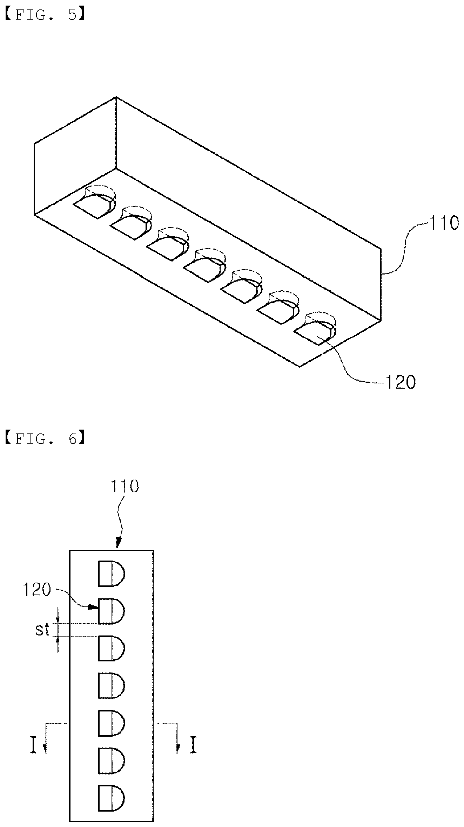

A shape of the bottom surface of the first air storage chamber will be described with reference to FIGS. 5 and 6.

A plurality of blow holes 120 may be formed in the first air storage chamber 110. The blow holes 120 may be formed at a predetermined interval St. The blow hole 120 may be formed in the longitudinal direction of the first air storage chamber 110. For example, the plurality of blow holes 120 are formed in a single row or a plurality of rows in the longitudinal direction of the first air storage chamber 110.

The blow hole 120 formed as described above may be used as a passage through which gas of the first air storage chamber 110 may be discharged into the water. Meanwhile, FIGS. 5 and 6 illustrate that seven blow holes 120 are formed in the first air storage chamber 110, but the number of the blow holes 120 is not limited to seven. For example, the number of the blow holes 120 may vary, depending on the size of the first air storage chamber 110 and the size of the bubbles to be formed through the blow holes 120.

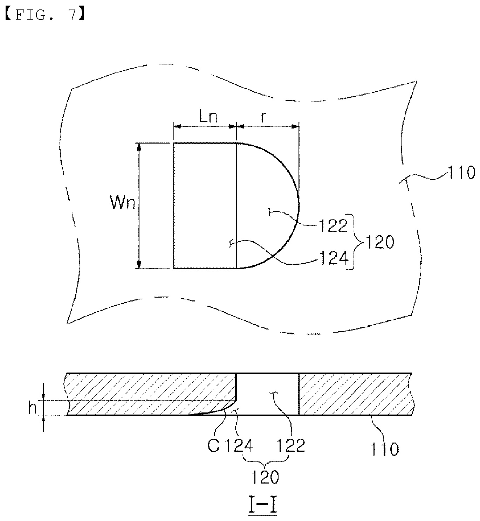

In the following, a shape of the blow hole will be described with reference to FIG. 7.

The blow hole 120 may be formed to blow gas out of the first air storage chamber 110 to an external zone of the hull 12. For example, the blow hole 120 may include a through-hole 122 passing through the bottom surface of the first air storage chamber 110. The through-hole 122 may be formed in a semicircular shape having a predetermined radius r, when viewed in a bottom view. The shape of the through-hole 122 is not limited to such a semicircular shape. For example, the through-hole 122 may be changed to another cross-sectional shape such as a trapezoidal shape or a triangular shape that becomes wider toward the stern of the hull 12.

The blow hole 120 may be formed to discharge gas of the first air storage chamber 110 in the stern direction of the hull 120. For example, the blow hole 120 may include an expanded portion 124 having an inclination. The expanded portion 124 may be disposed on the stern side of the through-hole 122, and may be formed to connect the surface of the hull from a certain portion of the through-hole 122. The expanded portion 124 may have generally a rectangular shape elongated in the width direction. For example, a width Wn of the expanded portion 124 may be equal to a diameter (2 x r) of the through-hole 122, and a length Ln of the expanded portion 124 may be equal to a radius r of the through-hole 122. The expanded portion 124 may be formed to be inclined from a point at a predetermined height h of the through-hole 122 in the stern direction as illustrated in FIG. 7. In this case, a cross-sectional shape of the expanded portion 124 may be a gently curved surface. The cross-sectional shape of the expanded portion 124 is not limited to such a curved surface. For example, a cross-sectional shape of the expanded portion 124 may be changed to a curved surface having a plurality of curvatures, or a stepped shape.

The expanded portion 124 formed as described above may guide bubbles blown out through the through-hole 122 to move along the surface of the hull 12. For example, the bubbles blown out through the blow hole 120 may form one bubble layer within several millimeters of height from the surface of the hull 12. Therefore, according to the present embodiment, frictional resistance between the hull 12 and seawater may be reduced through the thin bubble layer, such that a power required to operate the frictional resistance device 20 may be significantly reduced.

Meanwhile, the interval St between the blow holes 120, the radius r of the through-hole 122, and the width Wn of the expanded portion 124 may be all identical to each other (30 mm in the present embodiment), the height of the expanded portion 124 may be about 1/4 of these magnitudes (8 mm in the present embodiment). The magnitudes of the above configurations are not limited to the above-described numerical values.

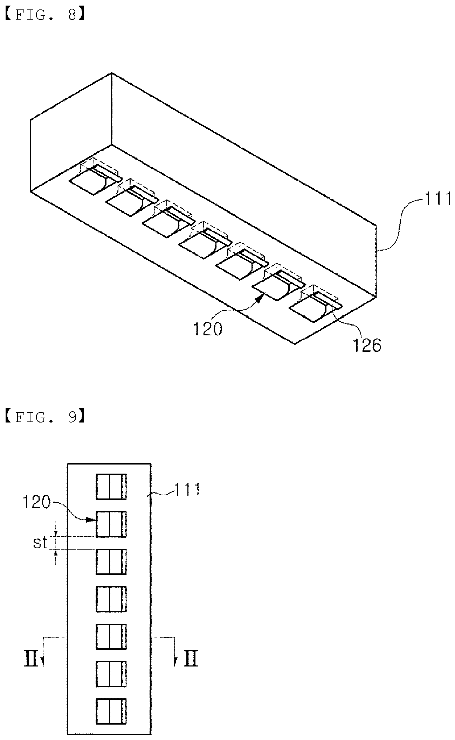

Next, another form of the air storage chamber will be described with reference to FIGS. 8 and 9.

An air storage chamber 111 may be modified to have a shape illustrated in FIGS. 8 and 9. In addition, an air storage chamber 111 according to the present embodiment may be distinguished from the first air storage chamber 110 of the above-described embodiment in view of a shape of a blow hole 120. For example, the blow hole 120 may include a protrusion 126.

The blow holes 120 may be disposed on the bottom surface of the air storage chamber 111 at a predetermined interval St. For example, the plurality of blow holes 120 may be disposed at the same interval as the width of the blow holes 120. For reference, the interval St in the present embodiment may be 30 mm.

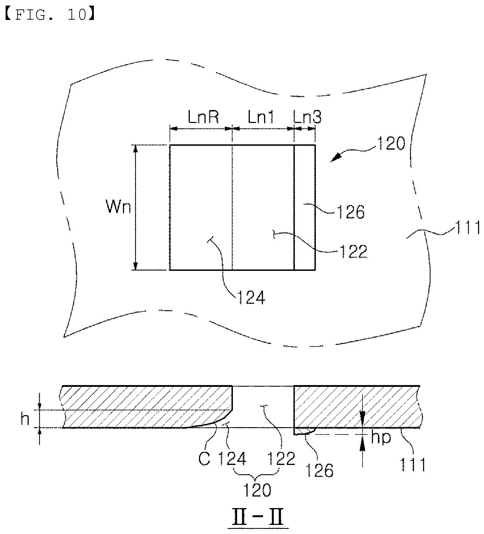

The shape of the blow hole will be described in detail with reference to FIG. 10.

The blow hole 120 may be formed to blow air out of the air storage chamber 111 to an external zone of a hull 12. For example, the blow hole 120 may include a through-hole 122 passing through a bottom surface of the air storage chamber 111. The through-hole 122 may have generally a rectangular shape elongated in a width direction, when viewed in a bottom view. The shape of the through-hole 122 is not limited to such a rectangular shape. For example, the through-hole 122 may be changed to another cross-sectional shape such as a trapezoidal shape or a triangular shape that becomes wider toward a stern of the hull 12.

The blow hole 120 may be formed to discharge gas of the air storage chamber 111 in the stern direction of the hull 120. For example, the blow hole 120 may include an expanded portion 124 having an inclination. The expanded portion 124 may be disposed on the stern side of the through-hole 122, and may be formed to connect the surface of the hull from a certain portion of the through-hole 122. The expanded portion 124 may have a rectangular shape that may be generally the same size as the through-hole 122. For example, a width Wn of the expanded portion 124 may be equal to a width of the through-hole 122, and a length Ln2 of the expanded portion 124 may be equal to a length Ln1 of the through-hole 122 (for reference, the lengths in the present embodiment may be all 30 mm). The expanded portion 124 may be formed to be inclined in the stern direction from a point at a predetermined height (h: 8 mm in the present embodiment) of the through-hole 122 as illustrated in FIG. 9. In this case, a cross-sectional shape of the expanded portion 124 may be a gently curved surface. The cross-sectional shape of the expanded portion 124 is not limited to such a curved surface. For example, a cross-sectional shape of the expanded portion 124 may be changed to a curved surface having a plurality of curvatures, or a stepped shape.

The blow hole 120 may be formed to control a thickness of a bubble layer. For example, the blow hole 120 may include a protrusion 126. The protrusion 126 may be disposed on a bow side of the through-hole 122. In addition, the protrusion 126 may be disposed at a forward end of the through-hole 122, and may protrude from the surface of the hull 12 in a downward direction.

The protrusions 126 may be generally elongated in the width direction of the through-holes 122. For example, a width of the protrusion 126 may be generally the same as a width Wn of the through-hole 122. The width of the protrusion 126 does not necessarily have to be the same as the width Wn of the through-hole 122. For example, the width of the protrusion 126 may be narrower or wider than the width Wn of the through-hole 122.

The protrusion 126 may have a cross-sectional shape that becomes thicker from the bow side toward the stern side. In addition, the surface of the protrusion 126 may be a curved surface having one or more curvatures. The surface of the protrusion 126 is not limited to such a curved surface. For example, the surface of the protrusion 126 may be a flat surface having a predetermined inclination angle, or a stepped surface shape.

The protrusion 126 may have a predetermined height hp. For example, the height of the protrusion 126 may be lower than the height h of the expanded portion 124. The height of the protrusion 126 is not limited to the above-mentioned range. For example, the height of the protrusion 126 may be increased or decreased, depending on the size of the ship 10 and the average operating speed. For reference, the height of the protrusion 126 in the present embodiment may be 3 mm.

The protrusion 126 formed as described above may change flow of seawater in a peripheral portion of the hull 12, and may prevent bubbles blown out through the blow hole 120 from being irregularly spread or diffused. Therefore, the blow hole 120 according to the present embodiment enables a formation of a thin bubble layer, thereby frictional resistance between the hull 12 and seawater may be effectively reduced.

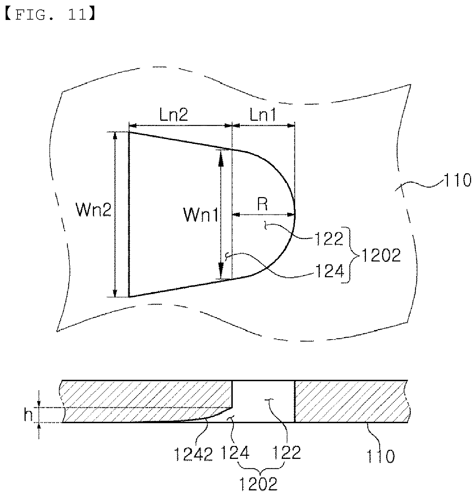

Referring to FIG. 11, a blow hole according to another embodiment will be described.

A blow hole 1202 according to the present embodiment may be distinguished from the above-described embodiment in view of a shape of an expanded portion 124. In addition, the blow hole 1202 according to the present embodiment may include an expanded portion 124 that becomes wider toward the stern of the hull. For example, the expanded portion 124 may have a generally trapezoidal shape as illustrated in FIG. 11. Therefore, a maximum width Wn2 of the expanded portion 124 may be wider than a maximum width Wn1 of the through-hole 122. A length Ln2 of the expanded portion 124 may be generally the same as a length Ln1 of the through-hole 122.

The blow hole 1202 configured as described above may be advantageous in distributing gas blown out through the through-hole 122 widely in the width direction of the hull.

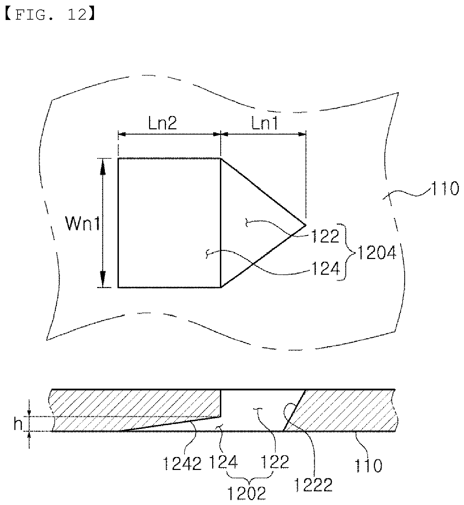

Referring to FIG. 12, a blow hole according to another embodiment will be described.

A blow hole 1204 according to the present embodiment may be distinguished from the above-described embodiment in view of a shape of a through-hole 122. In addition, the blow hole 1204 according to the present embodiment may include a through-hole 122 having a triangular shape that becomes wider toward the stern of the hull.

In addition, the blow hole 1204 according to the present embodiment may be distinguished from the above-described embodiment in view of a cross-sectional shape of a through-hole 122. In addition, the through-hole 122 may include a inclined surface 1222 inclined such that gas is blown out in the stern direction.

The blow hole 1204 configured as described above may be advantageous in blowing out gas in the stern direction and toward the surface of the hull, since the inclined surface 1222 may be formed in the through-hole 122.

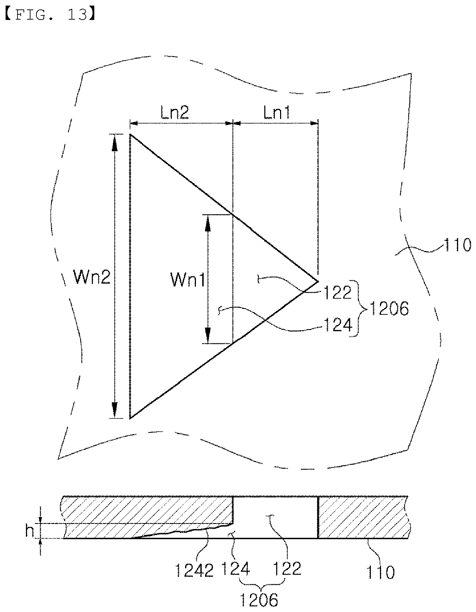

Referring to FIG. 13, a blow hole according to another embodiment will be described.

A blow hole 1206 according to the present embodiment may be distinguished from the above-described embodiment in view of a shape of an expanded portion 124. In addition, the blow hole 1206 according to the present embodiment may include an expanded portion 124 that becomes wider toward the stern of the hull. For example, the expanded portion 124 may have a generally trapezoidal shape as illustrated in FIG. 13. Therefore, a maximum width Wn2 of the expanded portion 124 may be wider than a maximum width Wn1 of the through-hole 122. A length Ln2 of the expanded portion 124 may be longer than a length Ln1 of the through-hole 122.

In addition, the expanded portion 124 of the blow hole 1206 according to the present embodiment may include a curvature. In addition, a portion of the expanded portion 124 connecting the surface of the hull from the through-hole 122 may be formed as a curved surface 1242 as illustrated in FIG. 13.

The blow hole 1206 configured as described above may be advantageous in distributing gas blown out through the through-hole 122 in the width direction of the hull, and in forming an air layer of a predetermined thickness by the gas.

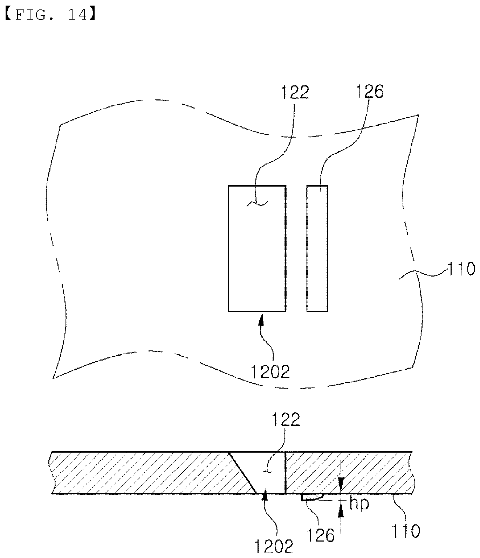

Referring to FIG. 14, a blow hole according to another embodiment will be described.

A blow hole 1202 according to the present embodiment may be distinguished from the above-described embodiment in view of a cross-sectional shape of a through-hole 122. In addition, the through-hole 122 of the blow hole 1202 may have a smaller cross-sectional area as a distance from a first air storage chamber 110 increases. In addition, the blow hole 1202 according to the present embodiment may be distinguished from the above-described embodiment in that the structure 126 may be disposed at an interval from the inlet of the blow hole 1202.

Since the blow hole 1202 formed as described above is close to a nozzle shape, a large amount of bubbles may be blown out farther to the rear portion of the hull.

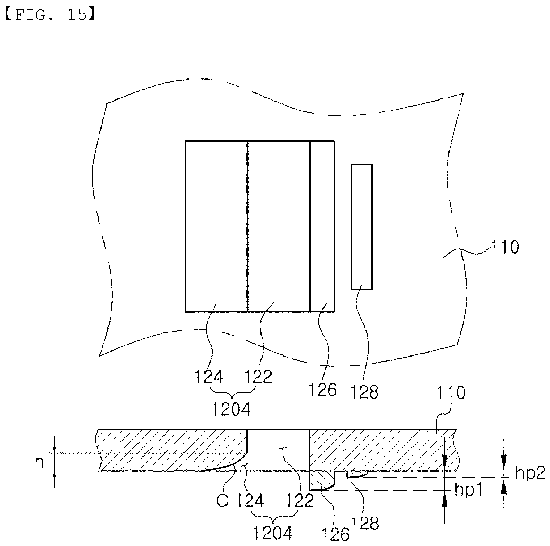

Referring to FIG. 15, a blow hole according to another embodiment will be described.

The blow holes 1204 according to the present embodiment may be distinguished from the above-described embodiments in view of a form of structures 126 and 128. In addition, a plurality of structures 126 and 128 may be formed in a peripheral potion of the blow hole 1204. In this case, the structures 126 and 128 may have different sizes or heights from each other. For example, a height hp1 of the first structure 126 may be higher than a height hp2 of the second structure 128.

The blow holes 1204 formed as described above are advantageous in view of the fact that seawater in a peripheral potion of the hull 12 may be guided to an external side of the air layer (or bubble layer) more effectively through the plurality of structures 126 and 128.

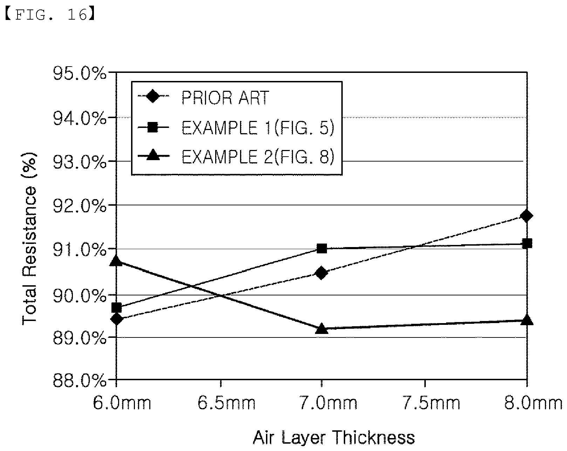

In the following, the total resistance value of the ship according to the embodiments described above with reference to FIG. 16 will be compared.

The prior art exhibited a relatively low total resistance value (89.4%), when a 6 mm thick air layer (or bubble layer) was formed, as illustrated in FIG. 16. However, when a thickness of an air layer increases with the increase of a ship's operating speed (or the increase of an amount of gas to be blown out), the total resistance value also increases. For example, a conventional ship exhibited a total resistance of 91.7%, when an 8 mm thick air layer was formed.

Meanwhile, a ship having the air storage chamber illustrated in FIG. 6 exhibited a total resistance value (89.7%) similar to that of the prior art, when a 6 mm thick air layer is formed as illustrated in FIG. 16, and exhibited the stable total resistance value even when a thickness of an air layer was increased with the increase of a ship's operating speed (or the increase of an amount of gas to be blown out). For example, the ship according to the present embodiment exhibited a constant total resistance value of 91.1%, even when an air layer having a thickness of 7.5 mm or more was formed.

In addition, a ship having the air storage chamber illustrated in FIG. 8 exhibited a relatively high total resistance value (90.7%) when an air layer having a thickness of 6 mm was formed as illustrated in FIG. 16, but exhibited a relatively low total resistance value when a thickness of an air layer was increased with the increase of a ship's operating speed (or an increase in an amount of gas to be blown out). For example, the ship according to the present embodiment exhibited a relatively low total resistance value of 89.4%, when an air layer of 7.0 mm or more was formed.

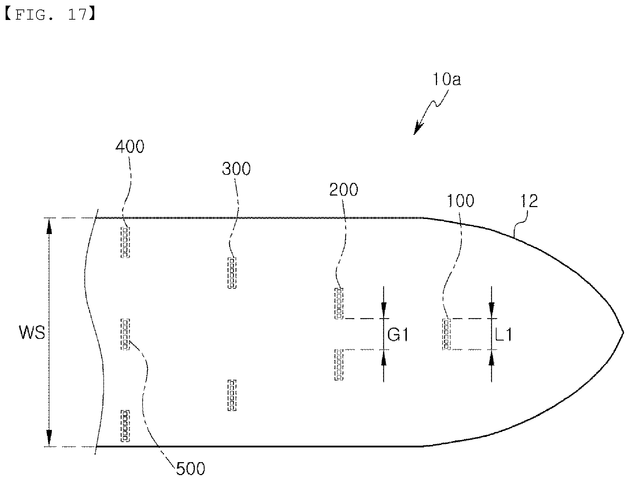

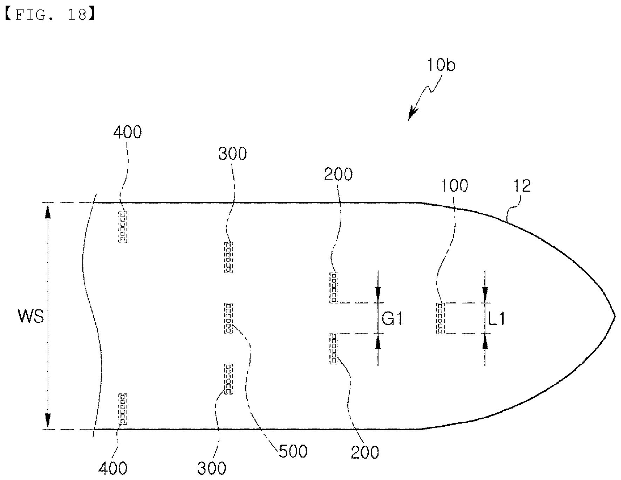

Next, a ship according to another embodiment will be described with reference to FIGS. 17 and 18.

Ships 10a and 10b according to the present embodiment may be distinguished from the above-described embodiments in view of the fact that the formers may further include an auxiliary air storage chamber 500. For example, the ship 10a may further include an auxiliary air storage chamber 500 disposed between a fourth air storage chamber 400 and a fourth air storage chamber 400. In another example, the ship 10b may further include an auxiliary air storage chamber 500 disposed between a third air storage chamber 300 and a third air storage chamber 300. The auxiliary air storage chamber 500 may be generally disposed to face a first air storage chamber 100.

In addition, the ships 10a and 10b according to the present embodiment may be distinguished from the above-described embodiments in view of an arrangement of the second air storage chamber 200. For example, an interval G1 between the second air storage chambers 200 may be equal to or greater than a length L1 of the first air storage chamber 100.

### [Pipeline Structure]

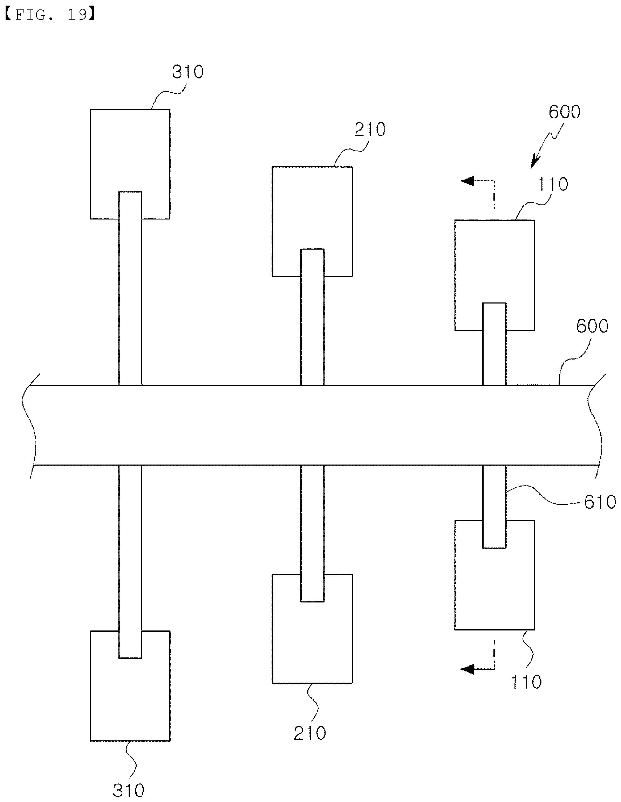

A pipeline structure of a friction reducing device will be described with reference to FIG. 19.

A friction reducing device 20 may include air storage chambers 110, 210, and 310, a pipe duct 600 and a connection pipeline 610. The configuration of the friction reducing device 20 is not limited to the above-described members. For example, the friction reducing device 20 may further include a pump configured to generate air, a tank configured to store the air generated by the pump, and the like.

The air storage chambers 110, 210, and 310 may be arranged in the longitudinal direction of the hull 12. For example, a first air storage chamber 110, a second air storage chamber 210, and a third air storage chamber 310 may be equally spaced in the longitudinal direction of the hull 12.

The air storage chambers 110, 210, and 310 may be arranged in a symmetrical manner. For example, the first air storage chamber 110, the second air storage chamber 210, and the third air storage chamber 310 may be configured as a pair, respectively.

The air storage chambers 110, 210, and 310 may be arranged in the width direction of the hull 12. For example, each pair of the air storage compartments 110, 210, and 310 may be spaced apart by predetermined intervals in the width of the hull 12.

The intervals in the width direction of the hull in the air storage chambers 110, 210, and 310 may increase in the stern direction of the hull 12. For example, an interval in the width direction of the hull between the first air storage chambers 110 may be shorter than an interval in the width direction of the hull between the second air storage chambers 210. Further, an interval in the width direction of the hull between the second air storage chambers 210 may be shorter than an interval in the width direction of the hull between the third air storage chambers 310.

Although the friction reducing device 20 may include three pairs of air storage chambers 110, 210, and 310 in FIG. 19, the air storage chambers 110, 210, and 310 constituting the friction reducing device 20 are not limited to three pairs. For example, the friction reducing device 20 may include four or more pairs of air storage chambers.

The friction reducing device 20 includes a pipe duct 600. The pipe duct 600 may be elongated in the longitudinal direction of the hull 12, and forms a flow path for air to be supplied to the air storage chambers 110, 210, and 310. For example, the pipe duct 600 may be covered or treated with sealing members such that gaseous air may be smoothly supplied to the air storage chambers 110, 210, and 310.

The friction reducing device 20 may include a connection pipeline 610. The connection pipeline 610 may extend in the width direction of the hull 12, and may connect the pipe duct 600 and the air storage chambers 110, 210, and 310. For reference, a cross-sectional area of the connection pipeline 610 may be formed to be smaller than a cross-sectional area of the pipe duct 600.

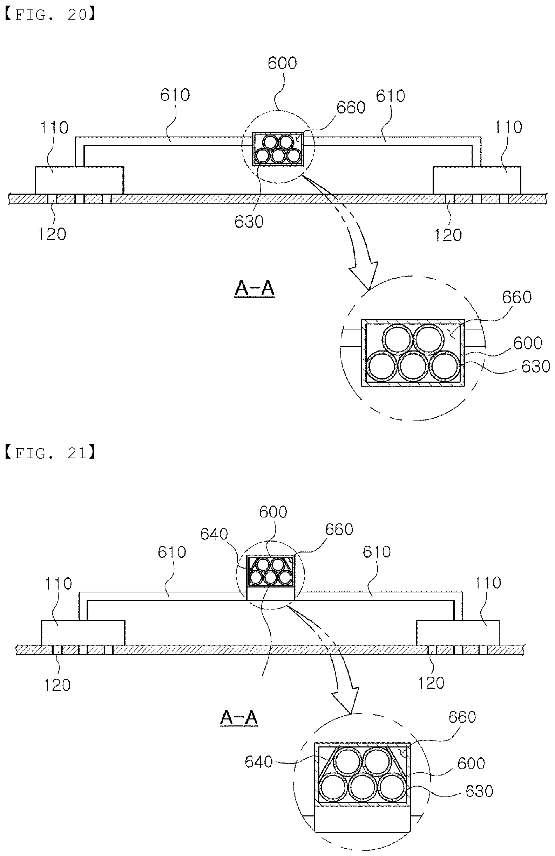

Next, an internal structure of a pipe duct will be described with reference to FIG. 20.

The pipe duct 600 is configured to include a facility pipeline 630. For example, the pipe duct 600 may have a sufficient size to accommodate the plurality of facility pipelines 630 therein. For reference, the facility pipeline 630 may include an electric pipeline, a drinking water pipeline, a hot water pipeline, a fuel pipeline, and the like.

The pipe duct 600 is configured to form an air flow path. For example, a space in the internal space of the pipe duct 600, except for a space occupied by the facility pipeline 630, may be used as the air flow path 660.

The pipe duct 600 configured as described above integrally provides a space for the facility pipeline 630 and the air flow path, such that the space occupied by these members in the hull 12 may be minimized. In addition, according to the present disclosure, since the facility pipeline 630 and the air flow path are formed integrally with the pipe duct 600, an operational process required for installation of these members may be shortened.

For reference, reference numeral 120 illustrated in FIG. 20 may be a blow hole configured to blow air out from the air storage chamber 110 to an external side of the hull.

Hereinafter, a mode of a pipe duct according to another embodiment of the present disclosure will be described.

First, another form of the pipe duct will be described with reference to FIG. 21.

A pipe duct 600 according to the present embodiment may be distinguished from the above-described embodiment in view of the fact that the former may further include a partitioning member 640.

The pipe duct 600 includes a facility pipeline 630, and a member capable of spatially dividing an air flow path. For example, a partitioning member 640 may be disposed in an internal portion of the pipe duct 600 to divide a space therein, except for a space in which the facility pipeline 630 is installed. Accordingly, most of the space of the pipe duct 600 is provided as a space for the facility pipeline 630, but a side space in an upper portion thereof may be used as the air flow path 660.

A ship 20 having the pipe duct 600 of this type may reduce air pollution from the facility pipeline 630.

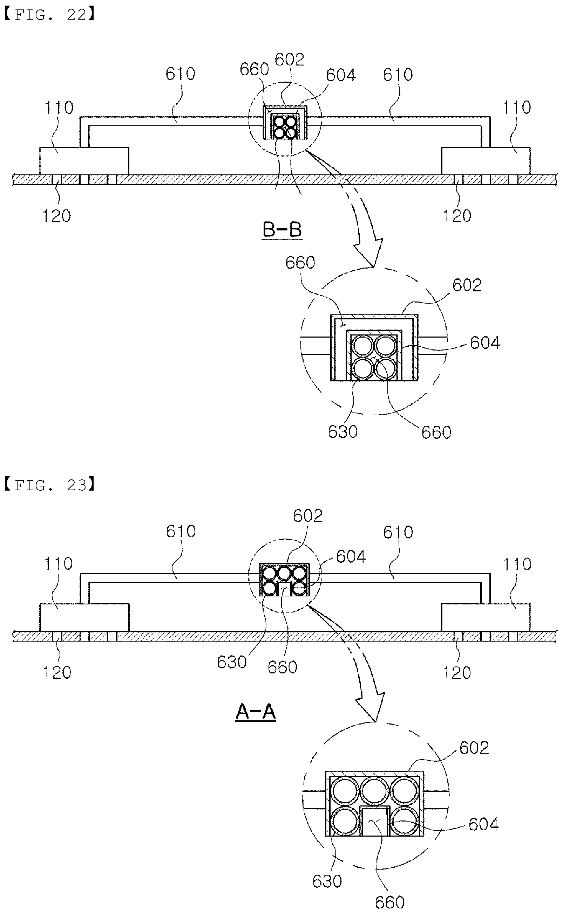

Next, another form of the pipe duct will be described with reference to FIGS. 22 and 23.

Pipe ducts 602 and 604 according to the present embodiment may be distinguished from the pipe ducts 600 described above in view of the fact that the formers are composed of a plurality of members. In addition, the pipe duct may include a first pipe duct 602 and a second pipe duct 604.

The first pipe duct 602 may be configured to accommodate the second pipe duct 604 therein. For example, a cross-sectional size of the first pipe duct 602 may be greater than a cross-sectional size of the second pipe duct 604. The first pipe duct 602 may receive a facility pipeline 630, or may form an air flow path 660. For example, the first pipe duct 602 may be used as a space for forming the air flow path 660 as illustrated in FIG. 22, or as a space for accommodating the facility pipeline 630 as illustrated in FIG. 23.

The second pipe duct 604 may receive the facility pipeline 630 or form an air flow path 660. For example, the second pipe duct 604 may accommodate the facility pipeline 630 therein as illustrated in FIG. 22, or may form an air flow path 660 as illustrated in FIG. 23.

Since the pipe ducts 602 and 604 configured as described above provide spaces for the facility pipeline 630 and the air flow path 660, the facility pipeline 630 may be easily repaired, and the air flow path 660 may be easily secured.

### [Side (Sea Chest) Structure of Ship]

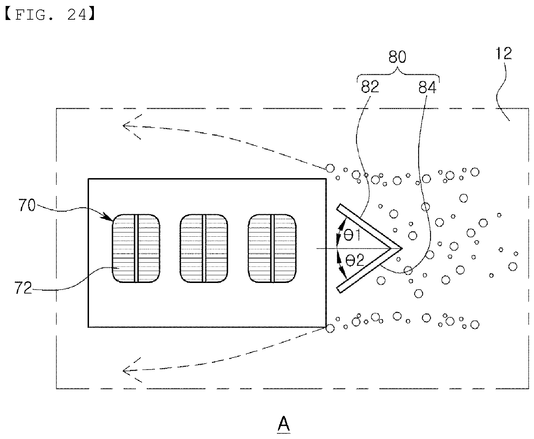

A side structure of a ship will be described with reference to FIG. 24.

A sea chest 70 may be formed in a side portion of the hull 12. The sea chest 70 may be connected to a pump disposed in an internal portion of the hull 12. Therefore, when the pump is operated, seawater may be introduced into the internal portion of the hull 12 through the sea chest 70.

A wire mesh 72 may be disposed at an entrance of the sea chest 70. The wire mesh 72 may block marine organisms from entering together with seawater through the sea chest 70 during operation of the pump. Since the wire mesh 72 has a predetermined interval, it may be not possible to reduce a phenomenon in which bubbles generated by the friction reducing device 20 are introduced into the pump in the internal portion of the hull 12. In the present embodiment, a guide member 80 may be disposed in the hull 12 in consideration of the above-described explanations.

The guide member 80 may be disposed on the bow side of the sea chest 70. The guide member 80 may be composed in plural. For example, the guide member 80 may include a first guide member 82 and a second guide member 84. The guide member 80 may be disposed at a predetermined angle with respect to the longitudinal direction of the hull 12. For example, the first guide member 82 may be disposed at a first angle θ1 with respect to a horizontal axis of the hull 12, and the first guide member 84 may be disposed at a second angle θ2 with respect to a horizontal axis of the hull 12. In this case, the first angle θ1 and the second angle θ2 may be the same size as each other. The first angle θ1 and the second angle θ2 are not necessarily formed to have the same size as each other. The guide member 80 may be protruded in a predetermined size with respect to the hull 12.

The guide member 80 arranged as described above may remarkably reduce the phenomenon of bubbles flowing along the surface of the hull 12 into the sea chest 70. For example, the guide member 80 may guide the bubbles flowing along the surface of the hull 12 to bypass the same in the longitudinal direction of the guide member 80 and in the vertical direction of the sea chest 70.

Therefore, according to the present embodiment, a problem of the efficiency reduction of the pump caused by inflow of bubbles into the pump may be effectively solved.

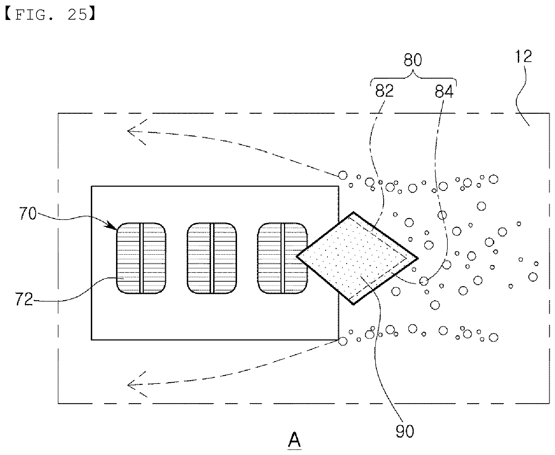

Hereinafter, other embodiments of the present disclosure for preventing inflow of bubbles will be described with reference to FIG. 25.

A ship 10 according to the present embodiment may be distinguished from the above-described embodiment in view of the fact that the former may further include a cover member 90. In addition, a cover member 90 capable of covering the bow side of the sea chest 70 may be disposed on the guide member 80. The cover member 90 may be connected to the guide member 80. In addition, the cover member 90 may have a shape extending from an end portion of the guide member 80 toward the sea chest 70.

The cover member 90 configured as described above may cover a front portion of the sea chest 70. Therefore, a phenomenon that the bubbles flowing from the bow of the hull 12 in the stern direction are introduced into the sea chest 70 may be reduced.

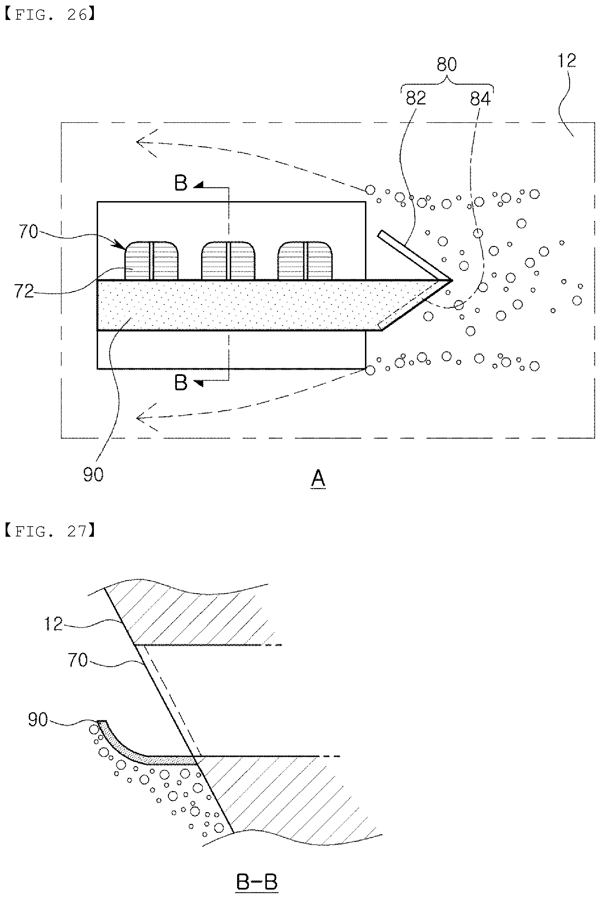

Next, referring to FIGS. 26 and 27, other aspects of the present disclosure for preventing inflow of bubbles will be described.

A ship 10 according to the present embodiment may be distinguished from the above-described embodiments in view of a form of a cover member 90. In addition, the cover member 90 may be disposed to cover a lower portion of the sea chest 70. For example, the cover member 90 may extend from the hull 12 toward the sea chest 70. In this case, a considerable space may be formed between the cover member 90 and the sea chest 70, such that the inflow of seawater thereinto may be not disturbed.

The cover member 90 configured as above described may cover the lower portion of the sea chest 70. Therefore, a phenomenon that bubbles flowing from the lower portion of the hull 12 in a water surface direction flows into the sea chest 70 may be effectively reduced.

Next, a description of a sea chest structure of a ship according to another embodiment will be described.

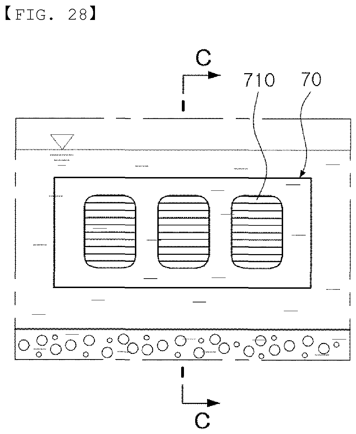

A ship 10 may include a means for utilizing seawater. For example, one or more of sea chest 70 may be formed on a side surface of a hull 12. The sea chest 70 may be open to an external portion of the hull 12, and may suck and receive seawater from the external portion of the hull 12. To this end, one or more of inlet 710 may be formed in the sea chest 70, as illustrated in FIG. 28.

The sea chest 70 may be connected to a mechanical device in an internal portion of the hull 12. For example, the sea chest 70 may be connected to a cooling device (not illustrated) of the hull 12. The sea chest 70 configured as described above may supply seawater to the cooling device through a pump.

The sea chest 70 may be connected to another mechanical device of the hull 12. For example, the sea chest 70 may be connected to a ballast water treatment device (not illustrated). The sea chest 70 configured as described above may supply seawater to a ballast water tank through a pump.

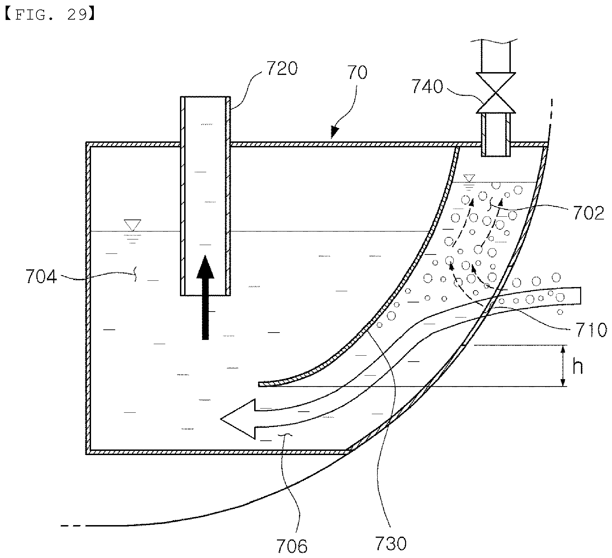

Next, referring to FIG. 29, an internal structure of a sea chest 70 will be described.

A sea chest 70 may be formed to store seawater. For this, a space for storing seawater may be formed in an internal portion of the sea chest 70. The sea chest 70 may be formed to allow inflow of seawater and supply of seawater. For this, an inlet 710 and an outlet 720 may be formed in the sea chest 70. The inlet 710 may be open to an external portion of the hull 12, such that seawater present in an external portion of the hull 12 may be introduced into an internal portion of the sea chest 70. Meanwhile, the outlet 720 may be open to an internal portion of the hull 12, such that the seawater stored in the internal portion of the sea chest 70 may be introduced.

The sea chest 70 may be configured to isolate bubbles contained in seawater. For this, a guide member 730 may be formed in an internal portion of the sea chest 70. The guide member 730 may extend from an upper portion of the sea chest 70 in a downward direction. Preferably, the guide member 730 may extend from the upper portion of the sea chest 70 to a point lower than the inlet 710. For example, a height of a lowermost point of the guide member 730 may be lower than a height of the lowermost point of the inlet 710 by a predetermined height h.

The guide member 730 may divide an internal space of the sea chest 70 into a plurality of regions. For example, the guide member 730 may partition the internal space of the sea chest 70 into a first region 702, a second region 704, and an intermediate region 706. The first region 702 may be formed near the inlet 710. In addition, the first region 702 may be a space extending from the inlet 710 to one surface of the guide member 730. The first region 702 formed as described above may be used as a space in which bubbles and the like having a lower specific gravity than seawater are collected. The second region 704 may be formed near the outlet 720. In addition, the second region 704 may be a space extending from the other surface of the guide member 730 to the outlet 720. The second region 704 formed as described above may be used as a space in which seawater from which bubbles are removed is stored. The intermediate region 706 may be formed in a lower portion of the sea chest 70. In addition, the intermediate region 706 may be formed near a boundary between the first region 702 and the second region 704. The intermediate region 706 formed as described above may be used as a space for preventing from moving bubbles from the first region 702 to the second region 704.

The sea chest 70 may include a structure that allows a discharge of bubbles. For example, an exhaust valve 740 may be formed in the first region 702 of the sea chest 70. The exhaust valve 740 may be connected to the atmosphere. For example, the exhaust valve 740 may be open up out of the water through a pipeline in an upward direction. The exhaust valve 740 configured as described above may enable a discharge of bubbles and gas collected in the first region 702.

The ship 10 configured as described above may collect and filter the bubbles contained in the seawater flowing into the sea chest 70. Therefore, an occurrence of faults and efficiency deterioration of mechanical devices, that may occur as bubbles are introduced into the pump in an internal portion of the hull, may be significantly reduced.

The following describes a sea chest having a different structure.

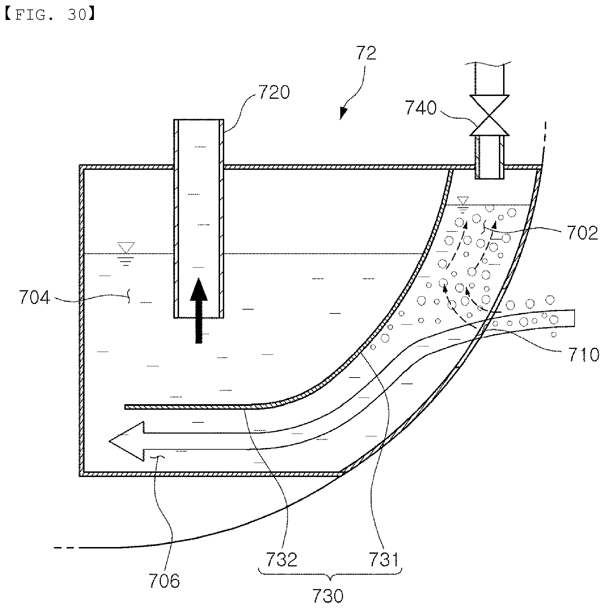

First, a sea chest according to another embodiment will be described with reference to FIG. 30.

A sea chest 72 according to the present embodiment may be distinguished from the sea chest 70 of the above-described embodiment in view of a guide member 730. In addition, the guide member 730 may include a first extended portion 731 and a second extended portion 732. The first extended portion 731 may extend generally in a vertical direction of the sea chest 72. The first extended portion 731 formed in this manner serves to divide an internal space of the sea chest 72 into a first region 702 and a second region 704, and to block horizontal movement of bubbles. The second extended portion 732 may extend generally in a horizontal direction of the sea chest 72. In addition, the second extended portion 732 may extend in an elongated form from a lowermost end of the first extended portion 731 in a direction opposite to the inlet 710. The second extended portion 732 configured as described above may increase a magnitude of an intermediate region 706, which may be a space that may be transferred from the first region 702 to the second region 704, to prevent from moving bubbles from the first region 702 to the second region 704.

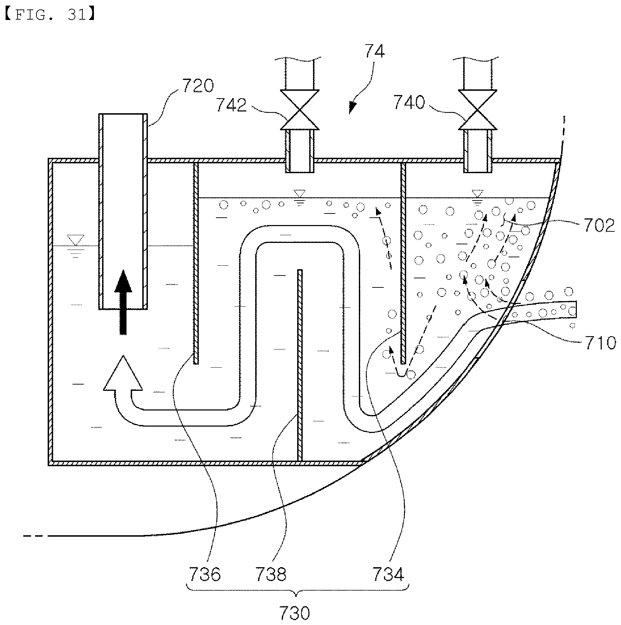

Next, a sea chest according to another embodiment will be described with reference to FIG. 31.

A sea chest 74 according to the present embodiment may be distinguished from the sea chests 70 and 72 of the above-described embodiments in view of a guide member 730. In addition, the guide member 730 may be composed of a plurality of first guide members 734 and 736, and a second guide member 738.

The first guide members 734 and 736 may extend from an upper portion of the sea chest 74 in a downward direction. The first guide member 734 and the first guide member 736 may be formed at intervals from an inlet 710 in a direction of an outlet 720. The plurality of first guide members 734 and 736 arranged in this manner may spatially separate an intermediate region 706 between a first region 702 and a second region 704.

The second guide member 738 may extend from a lower portion of the sea chest 74 in an upward direction, and may be disposed between the first guide member 734 and the first guide member 736. The second guide member 738 arranged as described above may extend a flow path formed in the intermediate region 706, to prevent bubbles from moving from the first region 702 to the second region 704.

The sea chest 74 according to the present embodiment may also be distinguished from the sea chests 70 and 72 of the above-described embodiments in view of exhaust valves 740 and 742. In addition, the exhaust valves 740 and 742 may be formed in the first region 702 and the intermediate region 706, respectively. The exhaust valves 740 and 742 arranged as described above may discharge bubbles collected in the first region 702 and the intermediate region 706. Therefore, bubbles contained in seawater may be removed more effectively.

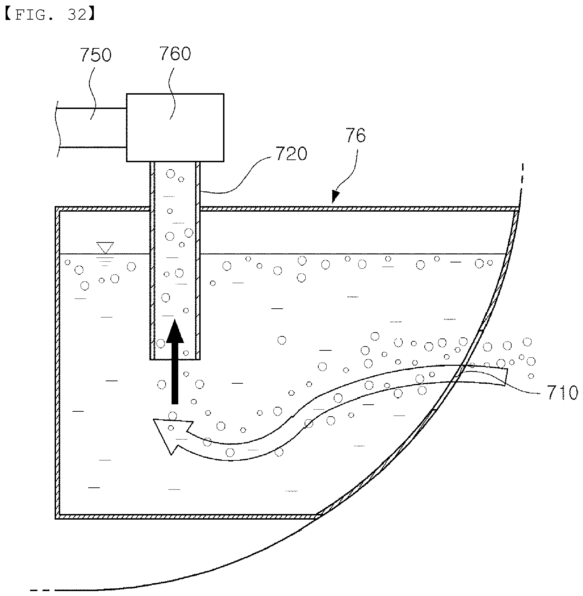

Next, a description of a sea chest according to another embodiment with reference to FIG. 32 will be provided.

A sea chest 76 may be formed to allow an inflow of seawater and a supply of seawater. For this, an inlet 710 and an outlet 720 may be formed in the sea chest 76. The inlet 710 may be open to an external portion of the hull 12 such that seawater present in the external portion of the hull 12 may be introduced into the sea chest 70, and the outlet 720 may be connected to a pipeline 750 extending to an internal portion of the hull 12,

A ship 10 may include a structure for discharging bubbles and gas introduced into the sea chest 76. For example, the ship 10 may include a first valve 760. The first valve 760 may be in the form of a trap structure. For example, the first valve 760 may be a device having a predetermined space for filtering gas or material having a specific gravity less than seawater, such as bubbles. For reference, since a valve having a trap structure is used for general purpose, a detailed description of the structure of the first valve 760 may be omitted. The first valve 760 may be disposed in the pipeline 750. Preferably, the first valve 760 may be disposed at a bended point of the pipeline 750 such that bubbles and gas are easily collected.

The ship 10 configured as described above may discharge bubbles contained in seawater flowing into the sea chest 76 through the first valve 760. Therefore, failure and efficiency deterioration phenomenon may be remarkably reduced.

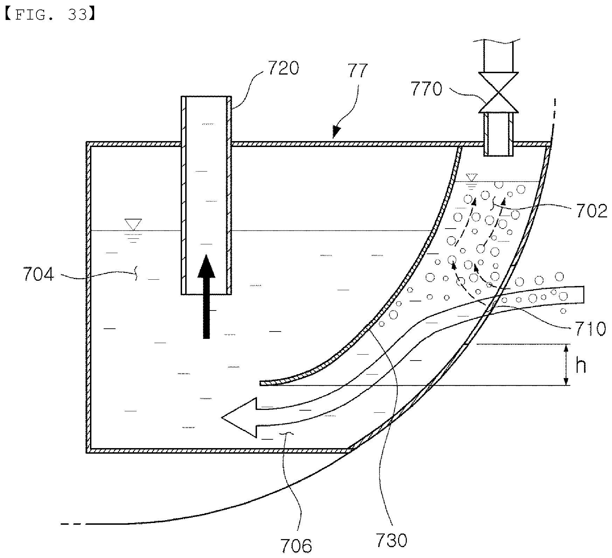

A sea chest according to another embodiment will be described with reference to FIG. 33.

A sea chest 77 according to the present embodiment may be configured to separate bubbles contained in seawater. For this, a guide member 730 may be formed in an internal portion of the sea chest 77. The guide member 730 may extend from an upper portion of the sea chest 77 in a downward direction. Preferably, the guide member 730 may extend from an upper portion of the sea chest 77 to a point lower than an inlet 710. For example, a height of a lowermost point of the guide member 730 may be lower than a height of a lowermost point of the inlet 710 by a predetermined height h.

The guide member 730 may divide an internal space of the sea chest 77 into a plurality of regions. For example, the guide member 730 may partition the internal space of the sea chest 77 into a first region 702, a second region 704, and an intermediate region 706. The first region 702 may be formed near the inlet 710. In addition, the first region 702 may be a space extending from the inlet 710 to one surface of the guide member 730. The first region 702 formed as described above may be used as a space in which bubbles and the like having a less specific gravity than seawater are collected. The second region 704 may be formed near the outlet 720. In addition, the second region 704 may be a space extending from the other surface of the guide member 730 to the outlet 720. The second region 704 formed as described above may be used as a space in which seawater from which bubbles are removed is stored. The intermediate region 706 may be formed in a lower portion of the sea chest 77. In addition, the intermediate region 706 may be formed near a boundary between the first region 702 and the second region 704. The intermediate region 706 formed as described above may be used as a space for preventing from moving bubbles from the first region 702 to the second region 704.

The sea chest 77 may include a structure that allows a discharge of bubbles. For example, a second valve 770 may be formed in the first region 702 of the sea chest 77. The second valve 770 may be connected to the atmosphere. For example, the second valve 770 may be open, up out of the water, through a pipeline in an upward direction. The second valve 770 configured as described above may enable the discharge of bubbles and gas collected in the first region 702.

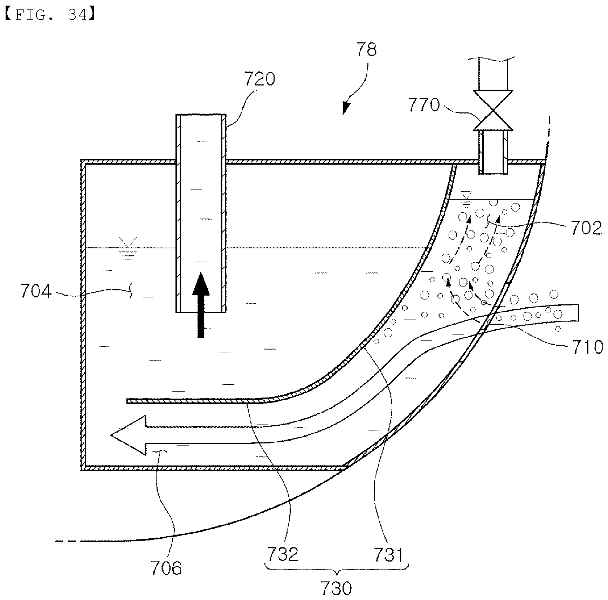

Next, a sea chest according to another embodiment will be described with reference to FIG. 34.

A sea chest 78 according to the present embodiment may be distinguished from the sea chests 76 and 77 of the above-described type in view of a guide member 730. In addition, the guide member 730 may include a first extended portion 731 and a second extended portion 732. The first extended portion 731 may extend generally in a vertical direction of the sea chest 78. The first extended portion 731 configured as described above serves to divide an internal space of the sea chest 78 into a first region 702 and a second region 704, and to block horizontal movement of the bubbles. The second extended portion 732 may extend generally in a horizontal direction of the sea chest 78. In addition, the second extended portion 732 may extend in an elongated in the direction opposite to the inlet 710 from a lowermost end of the first extended portion 731. The second extended portion 732 configured as described above may increase a magnitude of an intermediate region 706, which may be a space that may be transferred from the first region 702 to the second region 704, to prevent from moving bubbles from the first region 702 to the second region 704.

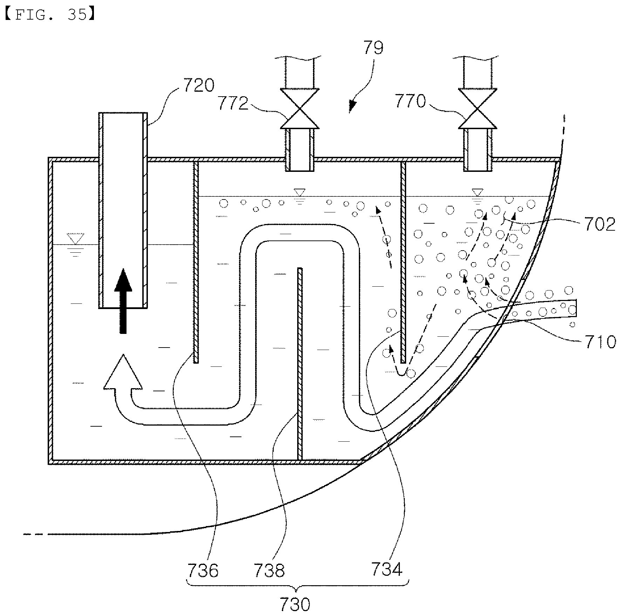

Next, a sea chest according to another embodiment will be described with reference to FIG. 35.

A sea chest 79 according to the present embodiment may be distinguished from the sea chests 76, 77, and 78 of the above-described embodiments in view of a guide member 730. In addition, the guide member 730 may be composed of a plurality of first guide members 734 and 736, and a second guide member 738.

The first guide members 734 and 736 may extend from an upper portion of the sea chest 79 in a downward direction. The first guide member 734 and the first guide member 736 may be formed at intervals from an inlet 710 in a direction of an outlet 720. The plurality of first guide members 734 and 736 arranged in this manner may spatially separate an intermediate region 706 between a first region 702 and a second region 704.

The second guide member 738 may extend from a lower portion of the sea chest 79 in an upward direction, and may be disposed between the first guide member 734 and the first guide member 736. The second guide member 738 arranged as described above may extend a flow path formed in the intermediate region 706, to prevent from moving bubble from the first region 702 to the second region 704.

The sea chest 79 according to the present embodiment may be distinguished from the sea chests 76, 77, and 78 of the above-described embodiments in view of second valves 740 and 742. In addition, the second valves 770 and 772 may be formed in the first region 702 and the intermediate region 706, respectively. The second valves 770 and 772 arranged as described above may discharge bubbles collected in the first region 702 and the intermediate region 706. Therefore, bubbles contained in seawater may be removed more effectively.

### [Ship Compressor]

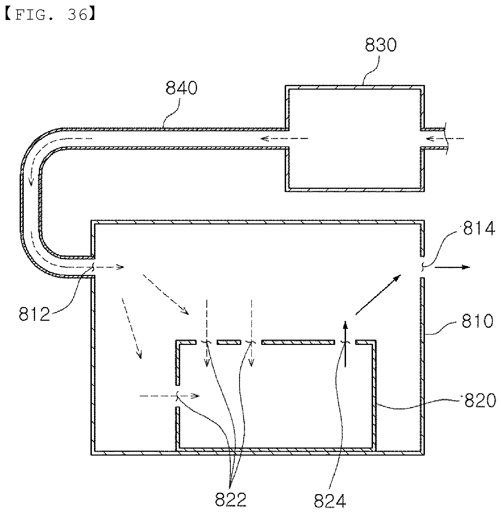

Next, an arrangement of a machine room and a compressor of a ship according to a first embodiment will be described with reference to FIG. 36.

A ship according to the present embodiment may include a machine room 810, a compressor 820, and a coffer dam 830. The components of the ship according to the present embodiment are not limited to the above-described configurations. For example, the ship may further include a blower for supplying air of the coffer dam 830 to the machine room 810. The ship may further include a device installed in a connection pipeline connected to the machine room to cool the intake air in the coffer dam 830 by a heat exchange principle. In addition, the ship may further include a valve capable of adjusting an amount of air supplied from the coffer dam 830 to the machine room 810.

The machine room 810 may be formed in the ship. In addition, the machine room 810 may be formed in an internal portion of or in the vicinity of the engine room in which an engine of the ship is disposed. A position of forming the machine room 810 is not limited to the internal portion of or the vicinity of the engine room. An intake port 812 and an outlet 814 may be formed in the machine room 810. The intake port 812 may be configured to allow external air to be introduced, and the outlet 814 may be configured to allow air in an internal portion of the machine room 810 to be supplied to the engine room or other necessary place.

The machine room 810 may be configured to have a significant volume. For example, the machine room 810 may be configured to receive one or more compressors 820. The machine room 810 may be configured to absorb the impact, or not to be deformed by the impact. For example, the machine room 810 may be made of a metal plate having a considerable thickness. The machine room 810 configured as described above may protect the compressor 820 from an external impact, and may protect the other mechanical devices of the ship from explosion of the compressor 820 and the like.

The compressor 820 may be disposed in the machine room 810. Preferably, the compressor 820 may be disposed in a central portion of the machine room 810. The compressor 820 may be configured to intake air from the machine room 810. For example, an intake port 822 of the compressor 820 may be open to an internal portion of the machine room 810 to intake air filled in the machine room 810. The compressor 820 may discharge compressed air through the machine room 810. For example, the outlet 824 of the compressor 820 may be configured to face the outlet 814 of the machine room 810, to quickly discharge the compressed air through the outlet 814.

The coffer dam 830 may be formed in a low temperature tank. For example, the coffer dam 830 may be formed near an evaporator of a liquefied gas tank. The coffer dam 830 configured as described above may be maintained at a temperature lower than a normal temperature at all times.

A ship according to the present embodiment may be configured to cool hot air. To this end, in the present embodiment, the coffer dam 830 and the machine room 820 may be connected to each other. For example, the connection pipeline 840 may be configured such that external air around the coffer dam 830 may be supplied to the intake port 812 of the machine room 810. Therefore, according to the present embodiment, since external air supplied to the machine room 820 may be always lower than a room temperature, the compression efficiency of the compressor 820 may be kept constant even when the ship sails in a tropical region or sails in the hotter summer season.

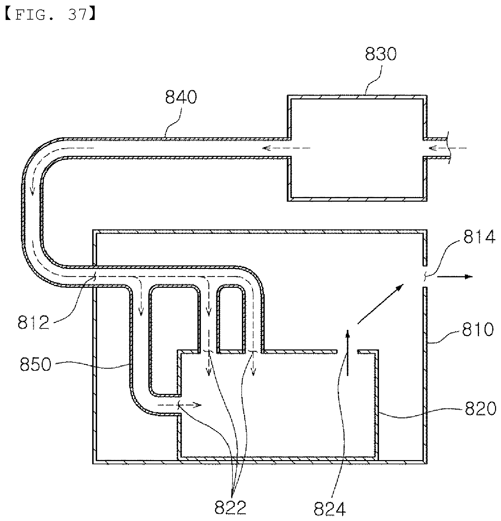

Referring to FIG. 37, an arrangement of a machine room and a compressor of a ship according to a second embodiment will be described.

A ship according to the present embodiment may be distinguished from the ship described above in view of the fact that the former may further include a gas-intake pipeline 850. For example, the ship according to the present embodiment may further include a gas-intake pipeline 850 for directly connecting an intake port 812 of a machine room 810 and an intake port 822 of a compressor 820.

Since a low-temperature air cooled in a coffer dam 830 may be supplied to the compressor 820 without being mixed with air in an internal portion of the machine room 810, the ship configured as above described may be suitable for sailing an extremely high temperature zone.

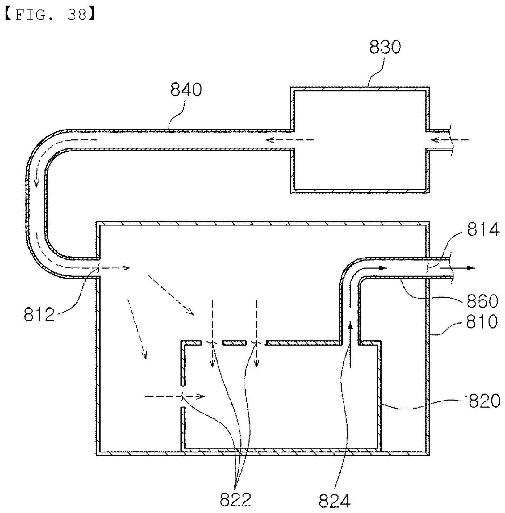

An arrangement of a machine room and a compressor of a ship according to a third embodiment will be described with reference to FIG. 38.

A ship according to the embodiment may be distinguished from the above-described ship in view of the fact that the former may further include a gas-exhaust pipeline 860. For example, the ship according to the present embodiment may further include the gas-exhaust pipeline 860 for directly connecting an outlet 824 of a compressor 820 and an outlet 814 of a machine room 810.

Compressed air in the compressor 820 may be supplied to a required point without mixing with air in an internal portion of the machine room 810. Therefore, operation efficiency of a machine using the compressed air may be improved.

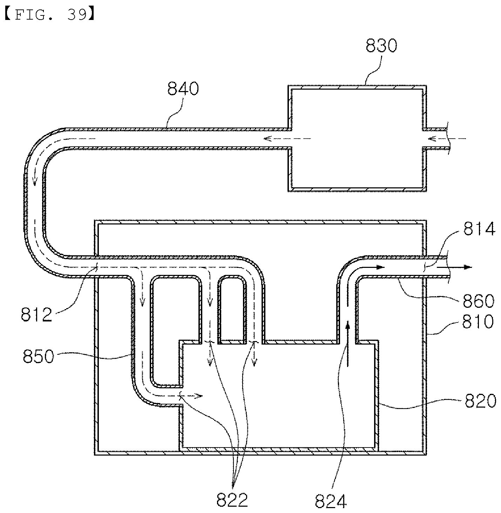

An arrangement of a machine room and a compressor of a ship according to a fourth embodiment will be described with reference to FIG. 39.

A ship according to the present embodiment may be distinguished from the above-described ship view of the fact that the former may include both a gas-intake pipeline 850 and a gas-exhaust pipeline 860. For example, the ship according to the present embodiment may further include the gas-intake pipeline 850 that directly connects an intake port 812 of a machine room 810 and an intake port 822 of a compressor 820, and may further include the gas-exhaust pipeline 860 that directly connects an outlet 824 of the compressor 820 and an outlet 814 of the machine room 810 of the machine room 810.

The ship configured as described above may exert both the advantages according to the second embodiment and the third embodiment described above.

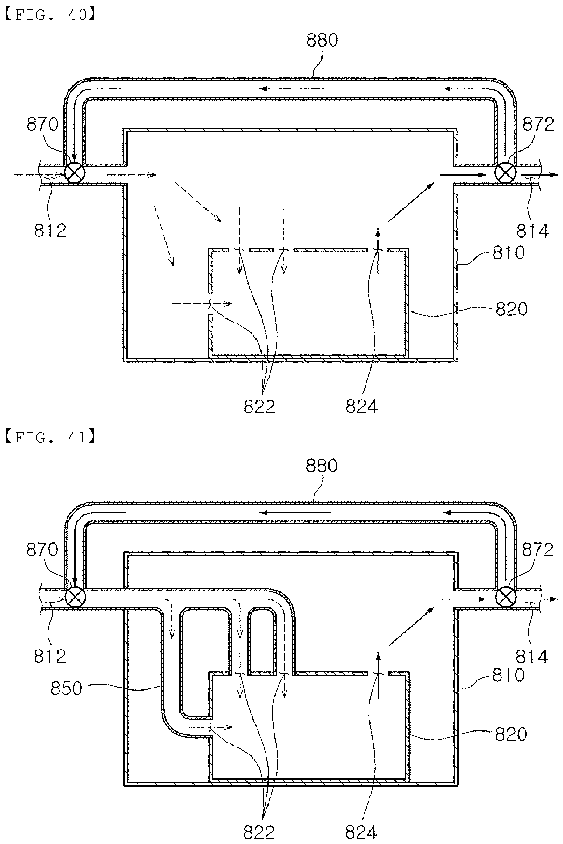

An arrangement of a machine room and a compressor of a ship according to a fifth embodiment will be described with reference to FIG. 40.

A ship according to the present embodiment may include a machine room 810, a compressor 820, and a recovery pipeline 880. The components of the ship according to the present embodiment are not limited to the above-described configurations. For example, the ship may further include a blower for supplying external air to the machine room 810.

The machine room 810 may be formed in the ship. In addition, the machine room 810 may be formed in an internal portion of or in the vicinity of the engine room in which an engine of the ship is disposed. A position of forming the machine room 810 is not limited to the internal portion of or the vicinity of the engine room. An intake port 812 and an outlet 814 may be formed in the machine room 810. The intake port 812 may be configured to allow external air to be introduced, and the outlet 814 may be configured to allow air in an internal portion of the machine room 810 to be supplied to the engine room or other necessary place.

The machine room 810 may be configured to have a significant volume. For example, the machine room 810 may be configured to receive one or more compressors 820. The machine room 810 may be configured to absorb the impact, or not to be deformed by the impact. For example, the machine room 810 may be made of a metal plate having a considerable thickness. The machine room 810 configured as described above may protect the compressor 820 from an external impacts, and may protect the other mechanical devices of the ship from explosions of the compressor 820 and the like.

The compressor 820 may be disposed in the machine room 810. Preferably, the compressor 820 may be disposed in a central portion of the machine room 810. The compressor 820 may be configured to intake air from the machine room 810. For example, an intake port 822 of the compressor 820 may be open to an internal portion of the machine room 810 to intake air filling the machine room 810. The compressor 820 may discharge compressed air through the machine room 810. For example, the outlet 824 of the compressor 820 may be configured to face the outlet 814 of the machine room 810, to quickly discharge the compressed air through the outlet 814.

The ship according to the present embodiment may be configured to increase a temperature of air introduced into the compressor 810. To this end, the present embodiment may include a recovery pipeline 880.

The recovery pipeline 880 may connect the intake port 812 and the outlet 814 of the machine room 810. In addition, the recovery pipeline 880 may connect an intake pipeline constituting the intake port 812 and a discharge pipeline constituting the outlet 814 such that a high temperature compressed air discharged from the machine room 810 may be re-introduced into the machine room 810. Therefore, according to the present embodiment, since cold air introduced through the intake port 812 is mixed with hot air re-introduced through the recovery pipeline 880, efficiency deterioration of the compressor 820, that may occur as the cold air is introduced into the compressor 820 as it is, may be reduced.

The ship according to the present embodiment may further include valves 870 and 172. A first valve 870 may be disposed at a connection point between the intake port 812 and the recovery pipeline 880, and a second valve 872 may be disposed at a connection point between the outlet 814 and the recovery pipeline 880. The first valve 870 and the second valve 872 may be in the form of a three-way valve capable of adjusting a direction of flow at the connection point.

The valves 870 and 172 configured as described above may control an amount of air re-flowing from the recovery pipeline 880 to the intake port 812 and an amount of air re-flowing from the outlet 814 to the recovery pipeline 880. Therefore, efficiency of the compressor 820 may be improved.

An arrangement of a machine room and a compressor of a ship according to a sixth embodiment will be described with reference to FIG. 41.

A ship according to the present embodiment may be distinguished from the ship described above in view of the fact that the former may further include a gas-intake pipeline 850. For example, the ship according to the present embodiment may further include the gas-intake pipeline 850 for directly connecting an intake port 812 of a machine room 810 and an intake port 822 of a compressor 820.

A high-temperature air re-introduced by the recovery pipeline may be directly supplied to the compressor 820, without being mixed with the cold air in an internal portion of the machine room 810. Therefore, the ship configured as described above may be suitable for sailing in a region having a very low temperature.

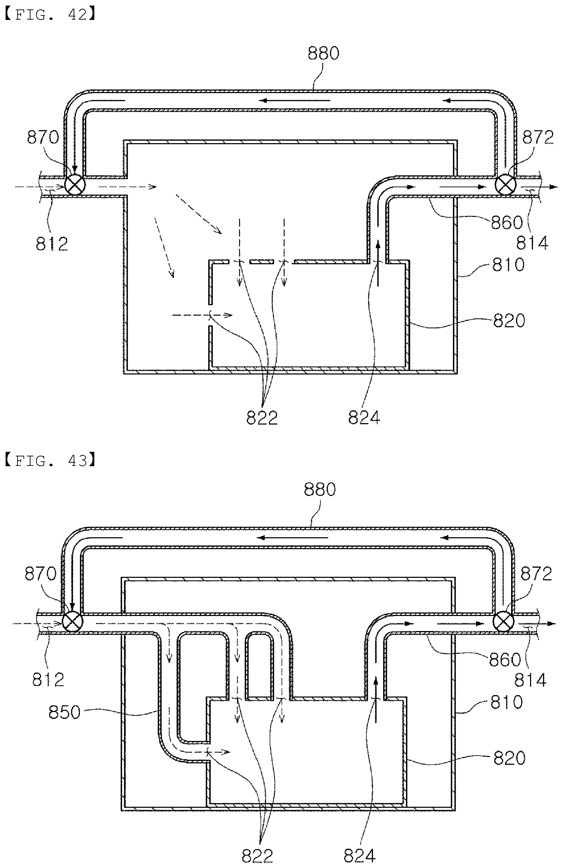

An arrangement of a machine room and a compressor of a ship according to a seventh embodiment will be described with reference to FIG. 42.

A ship according to the embodiment may be distinguished from the ship described above in view of the fact that the former may further include a gas-exhaust pipeline 860. For example, the ship according to the present embodiment may further include the gas-exhaust pipeline 860 for directly connecting an outlet 824 of a compressor 820 and an outlet 814 of a machine room 810.

Compressed air in the compressor 820 may be supplied to a required point without mixing with air in an internal portion of the machine room 810. Therefore, operation efficiency of a machine using the compressed air may be improved.

An arrangement of a machine room and a compressor of a ship according to an eighth embodiment will be described with reference to FIG. 43.

A ship according to the present embodiment may be distinguished from the ship described above in view of the fact that the former may include both a gas-intake pipeline 850 and a gas-exhaust pipeline 860. For example, the ship according to the present embodiment may further include the gas-intake pipeline 850 that directly connects an intake port 812 of a machine room 810 and an intake port 822 of a compressor 820, and may further include the gas-exhaust pipeline 860 that directly connects an outlet 824 of the compressor 820 and an outlet 814 of the machine room 810 of the machine room 810.

The ships configured as described above may exert all the advantages according to the sixth and seventh embodiments described above.

Various features described in the foregoing embodiments may be applied in combination with other embodiments unless the description to the contrary is explicitly stated.

While exemplary embodiments have been illustrated and described above, it will be apparent to those skilled in the art that modifications and variations could be made without departing from the scope of the present disclosure as defined by the appended claims.

## Claims

1. A friction reducing device (20) for a vessel comprising:
a first air storage unit (100) including a blow hole configured to blow air out into water;
a plurality of second air storage units (200) disposed rearward from the first air storage unit, each including a blow hole configured to blow air out into water, and disposed at a first interval formed between the second air storage units;
first detection sensors (40;41;42;43;44;45;46) each configured to measure air pressures of a respective first air storage unit and the second air storage unit;
a first valve (60; 760; 870) configured to adjust an amount of air supplied to the first air storage unit;
second valves (61; 62; 770; 772; 872) configured to adjust an amount of air supplied to the second air storage units; **characterised in that** the friction reducing device comprises
a pipe duct (600) to form an air flow path to the first and second air storage units (100, 200), accommodating a facility pipeline (630) therein, wherein the facility pipeline (630) may include an electric pipeline, a drinking water pipeline, a hot water pipeline, a fuel pipeline, and the like and wherein a space in the internal space of the pipe duct (600), except for a space occupied by the facility pipeline (630), is used as an air flow path (660), and
wherein the first interval is shorter than a dimension in a width direction of the first air storage unit.

2. The friction reducing device for a vessel according to claim 1, further comprising a plurality of third air storage units disposed rearward from the second air storage unit, each including a blow hole configured to blow air out into water, and disposed at a second interval.

3. The friction reducing device for a vessel according to claim 2, wherein the second interval is longer than the first interval.

4. The friction reducing device for a vessel according to claim 2, further comprising a plurality of fourth air storage units disposed rearward from the third air storage unit, each including a blow hole configured to blow air out into water, and disposed at a third interval.

5. The friction reducing device for a vessel according to claim 4, wherein the third interval is longer than the second interval.

6. The friction reducing device for a vessel according to claim 4, further comprising an auxiliary air storage unit disposed between the plurality of fourth air storage units and including a blow hole configured to blow air out into water.

7. The friction reducing device for a vessel according to claim 1, further comprising:
a main pipeline connected to the first air storage unit and extending in a rear direction; and
a subsidiary pipeline connecting the main pipeline and the second air storage unit.

8. The friction reducing device for a vessel according to claim 1, further comprising a controller receiving information regarding the air pressure of the first air storage unit and the air pressure of the second air storage unit from the first detection sensor, and controlling opening and closing of the first and second valves, such that deviations between the air pressure of the first air storage unit and the air pressure of the second air storage unit are reduced.

9. The friction reducing device for a vessel according to claim 1,
wherein the blow hole comprises
a through-hole formed in a first air storage chamber; and
an expanded portion formed in the first air storage chamber and extending from a surface of the first air storage chamber to a side surface of the through-hole.

## Patentansprüche

1. Reibungsminderungsvorrichtung (20) für ein Schiff, die Folgendes umfasst:
eine erste Luftspeichereinheit (100), die ein Blasloch umfasst, dass zum Ausblasen von Luft ins Wasser konfiguriert ist;
eine Vielzahl von zweiten Luftspeichereinheiten (200), die hinter der ersten Luftspeichereinheit angeordnet sind und jeweils ein Blasloch umfassen, das zum Ausblasen von Luft ins Wasser konfiguriert ist, und in einem zwischen den zweiten Luftspeichereinheiten gebildeten ersten Abstand angeordnet sind;
erste Erfassungssensoren (40;41;42;43;44;45;46), die jeweils so konfiguriert sind, dass sie Luftdrücke einer entsprechenden ersten Luftspeichereinheit und der zweiten Luftspeichereinheit messen;
ein erstes Ventil (60; 760; 870), dass so konfiguriert ist, dass es eine Luftmenge einstellt, die der ersten Luftspeichereinheit zugeführt wird;
zweite Ventile (61; 62; 770; 772; 872), die so konfiguriert sind, dass sie eine Luftmenge einstellen, die den zweiten Luftspeichereinheiten zugeführt wird; **gekennzeichnet dadurch, dass** die Reibungsminderungsvorrichtung Folgendes umfasst:
eine Rohrleitung (600) zur Bildung eines Luftströmungswegs zu der ersten und zweiten Luftspeichereinheit (100, 200), die eine Anlagenrohrleitung (630) darin aufnimmt, wobei die Anlagenrohrleitung (630) eine elektrische Rohrleitung, eine Trinkwasserrohrleitung, eine Heißwasserrohrleitung, eine Kraftstoffrohrleitung und dergleichen enthalten kann und wobei ein Raum in dem Innenraum der Rohrleitung (600), mit Ausnahme eines Raums, der von der Anlagenrohrleitung (630) eingenommen wird, als Luftströmungsweg (660) verwendet wird und wobei der erste Abstand kürzer als eine Abmessung in einer Breitenrichtung der ersten Luftspeichereinheit ist.

2. Reibungsminderungsvorrichtung für ein Schiff nach Anspruch 1, die ferner eine Vielzahl von dritten Luftspeichereinheiten umfasst, die hinter der zweiten Luftspeichereinheit angeordnet sind und jeweils ein Blasloch enthalten, das zum Ausblasen von Luft ins Wasser konfiguriert ist, und die in einem zweiten Abstand angeordnet sind.

3. Reibungsminderungsvorrichtung für ein Schiff nach Anspruch 2, wobei der zweite Abstand länger als der erste Abstand ist.

4. Reibungsminderungsvorrichtung für ein Schiff nach Anspruch 2, die ferner eine Vielzahl von vierten Luftspeichereinheiten umfasst, die hinter der dritten Luftspeichereinheit angeordnet sind und jeweils ein Blasloch enthalten, das zum Ausblasen von Luft ins Wasser konfiguriert ist, und die in einem dritten Abstand angeordnet sind.

5. Reibungsminderungsvorrichtung für ein Schiff nach Anspruch 4, wobei der dritte Abstand länger als der zweite Abstand ist.

6. Reibungsminderungsvorrichtung für ein Schiff nach Anspruch 4, die ferner eine zusätzliche Luftspeichereinheit umfasst, die zwischen der Vielzahl von vierten Luftspeichereinheiten angeordnet ist und ein Blasloch umfasst, das zum Ausblasen von Luft ins Wasser konfiguriert ist.

7. Reibungsminderungsvorrichtung für ein Schiff nach Anspruch 1, die ferner Folgendes umfasst:
eine Hauptrohrleitung, die mit der ersten Luftspeichereinheit verbunden ist und sich nach hinten erstreckt; und
eine Nebenrohrleitung, die die Hauptrohrleitung und die zweite Luftspeichereinheit verbindet.

8. Reibungsminderungsvorrichtung für ein Schiff nach Anspruch 1, die ferner eine Steuerung umfasst, die Informationen bezüglich des Luftdrucks der ersten Luftspeichereinheit und des Luftdrucks der zweiten Luftspeichereinheit von dem ersten Erfassungssensor empfängt und das Öffnen und Schließen des ersten und zweiten Ventils steuert, so dass Abweichungen zwischen dem Luftdruck der ersten Luftspeichereinheit und dem Luftdruck der zweiten Luftspeichereinheit verringert werden.

9. Reibungsminderungsvorrichtung für ein Schiff nach Anspruch 1,
wobei das Blasloch Folgendes umfasst:
ein Durchgangsloch, das in einer ersten Luftspeicherkammer gebildet ist; und
einen erweiterten Teil, der in der ersten Luftspeicherkammer gebildet ist und sich von einer Oberfläche der ersten Luftspeicherkammer zu einer Seitenfläche des Durchgangslochs erstreckt.

## Revendications

1. Dispositif de réduction du frottement (20) pour un navire comprenant :
une première unité de stockage d'air (100) incluant un trou de soufflage configuré pour souffler de l'air dans l'eau ;
une pluralité de deuxièmes unités de stockage d'air (200) disposées à l'arrière de la première unité de stockage d'air, incluant chacune un trou de soufflage configuré pour souffler de l'air dans l'eau, et disposées à un premier intervalle formé entre les deuxièmes unités de stockage d'air ;
des premiers capteurs de détection (40 ; 41 ; 42 ; 43 ; 44 ; 45 ; 46) configurés chacun pour mesurer les pressions d'air d'une première unité de stockage d'air respective et de la deuxième unité de stockage d'air ;
une première valve (60 ; 760 ; 870) configurée pour ajuster une quantité d'air fournie à la première unité de stockage d'air ;
des deuxièmes valves (61; 62 ; 770 ; 772 ; 872) configurées pour ajuster une quantité d'air fournie aux deuxièmes unités de stockage d'air ; **caractérisé en ce que** le dispositif de réduction du frottement comprend
un conduit de tuyaux (600) pour former un trajet de flux d'air vers les première et deuxième unités de stockage d'air (100, 200), logeant une canalisation d'installation (630) à l'intérieur, où la canalisation d'installation (630) peut inclure une canalisation électrique, une canalisation d'eau potable, une canalisation d'eau chaude, une canalisation de carburant, et similaires et où un espace dans l'espace interne du conduit de tuyaux (600), à l'exception d'un espace occupé par la canalisation d'installation (630), est utilisé comme un trajet de flux d'air (660), et
où le premier intervalle est plus court qu'une dimension dans le sens de la largeur de la première unité de stockage d'air.

2. Dispositif de réduction du frottement pour un navire selon la revendication 1, comprenant en outre une pluralité de troisièmes unités de stockage d'air disposées à l'arrière de la deuxième unité de stockage d'air, incluant chacune un trou de soufflage configuré pour souffler de l'air dans l'eau, et disposées à un deuxième intervalle.

3. Dispositif de réduction du frottement pour un navire selon la revendication 2, où le deuxième intervalle est plus long que le premier intervalle.

4. Dispositif de réduction du frottement pour un navire selon la revendication 2, comprenant en outre une pluralité de quatrièmes unités de stockage d'air disposées à l'arrière de la troisième unité de stockage d'air, incluant chacune un trou de soufflage configuré pour souffler de l'air dans l'eau, et disposées à un troisième intervalle.

5. Dispositif de réduction du frottement pour un navire selon la revendication 4, où le troisième intervalle est plus long que le deuxième intervalle.

6. Dispositif de réduction du frottement pour un navire selon la revendication 4, comprenant en outre une unité de stockage d'air auxiliaire disposée entre la pluralité de quatrièmes unités de stockage d'air et incluant un trou de soufflage configuré pour souffler de l'air dans l'eau.

7. Dispositif de réduction du frottement pour un navire selon la revendication 1, comprenant en outre :
une canalisation principale connectée à la première unité de stockage d'air et s'étendant dans une direction arrière ; et
une canalisation subsidiaire connectant la canalisation principale et la deuxième unité de stockage d'air.

8. Dispositif de réduction du frottement pour un navire selon la revendication 1, comprenant en outre un contrôleur recevant des informations concernant la pression d'air de la première unité de stockage d'air et la pression d'air de la deuxième unité de stockage d'air du premier capteur de détection, et commandant l'ouverture et la fermeture des première et deuxième valves, de telle sorte que les écarts entre la pression d'air de la première unité de stockage d'air et la pression d'air de la deuxième unité de stockage d'air sont réduits.

9. Dispositif de réduction du frottement pour un navire selon la revendication 1,
où le trou de soufflage comprend
un trou traversant formé dans une première chambre de stockage d'air ; et
une portion expansée formée dans la première chambre de stockage d'air et s'étendant d'une surface de la première chambre de stockage d'air jusqu'à une surface latérale du trou traversant.
